(19) Europäisches Patentamt
European Patent Office
Office européen des brevets

(11) **EP 3 162 045 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(51) Int Cl.:
*H04N 5/225* (2006.01)  *G06T 7/00* (2017.01)
*H04N 17/00* (2006.01)

(21) Anmeldenummer: **15741502.7**

(22) Anmeldetag: **24.06.2015**

(86) Internationale Anmeldenummer:
**PCT/EP2015/064284**

(87) Internationale Veröffentlichungsnummer:
**WO 2015/197710 (30.12.2015 Gazette 2015/52)**

(54) **VORRICHTUNG UND VERFAHREN ZUR RELATIVEN POSITIONIERUNG EINER MULTIAPERTUROPTIK MIT MEHREREN OPTISCHEN KANÄLEN RELATIV ZU EINEM BILDSENSOR**

DEVICE AND METHOD FOR POSITIONING A MULTI-APERTURE OPTICAL UNIT WITH MULTIPLE OPTICAL CHANNELS RELATIVE TO AN IMAGE SENSOR

DISPOSITIF ET PROCÉDÉ DE POSITIONNEMENT RELATIF D'UNE OPTIQUE À MULTIPLES OUVERTURES AVEC PLUSIEURS CANAUX OPTIQUES RELATIVEMENT À UN CAPTEUR D'IMAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2014 DE 102014212104**

(43) Veröffentlichungstag der Anmeldung:
**03.05.2017 Patentblatt 2017/18**

(73) Patentinhaber: **FRAUNHOFER-GESELLSCHAFT zur Förderung der angewandten Forschung e.V. 80636 München (DE)**

(72) Erfinder:
• **BRÜCKNER, Andreas 07743 Jena (DE)**
• **WIPPERMANN, Frank 98617 Meiningen (DE)**
• **BRÄUER, Andreas 07646 Schlöben (DE)**

(74) Vertreter: **Schenk, Markus et al Schoppe, Zimmermann, Stöckeler Zinkler, Schenk & Partner mbB Patentanwälte Radlkoferstrasse 2 81373 München (DE)**

(56) Entgegenhaltungen:
**EP-A2- 2 736 262    JP-A- 2009 092 876
JP-A- 2013 120 295    US-A1- 2011 001 814**

EP 3 162 045 B1

**Beschreibung**

Die vorliegende Erfindung bezieht sich auf eine Vorrichtung und auf ein Verfahren zur relativen Positionierung einer Multiaperturoptik mit mehreren optischen Kanälen. Die vorliegende Erfindung bezieht sich ferner auf ein Verfahren zur aktiven Ausrichtung einer Multiaperturoptik zu einem digitalen Bildsensor.

Bei der Fertigung von hochauflösenden miniaturisierten Kameramodulen wird für den Schritt der Objektivintegration ein aktiver Ausrichtungsprozess, d. h. die aktive Ausrichtung des Objektivs in Bezug auf den Bildsensor unter Beobachtung und Evaluation des entstehenden Bildes, durchgeführt . Dabei wird das Objektiv relativ zum Bildsensor bewegt und das entstehende Bild entsprechend vorgegebener Gütekriterien der Bildschärfe (typischerweise Messung des Bildkontrastes bzw. der Modulationstransferfunktion [kurz: MTF] an verschiedenen Stellen im Bild) ausgewertet. Die Platzierung wird z. B. durch die Maximierung der gemessenen Gütekriterien optimiert und das Objektiv in dieser Stellung entsprechend zum Bildsensor (z. B. durch Kleben) fixiert. Eine hierfür notwendige Voraussetzung ist, dass sich die für die Gütekriterien herangezogenen Eigenschaften des Objektivs (z. B. Bildkontrast, MTF) über die im Prozess verwendeten Positionsverschiebungen hinreichend messbar verändern, wie es bspw. aus der US 2013/0047396 A1 oder der JP 20070269879 bekannt ist.

Konventionelle Optimierungsalgorithmen versagen bei der aktiven Ausrichtung, wenn die Parameter der Objektive relativ zu den Positionierschritten nur geringfügig variieren . Letzteres trifft z. B. auf Objektive mit großer Schärfentiefe (und insbesondere Multiapertur-Objektiven aus Mikrolinsenarrays) zu, bei denen eine Änderung des z-Abstands zwischen Objektiv und Bildsensor nur zu geringen und im realen Fall schwer messbaren Änderungen der Bildschärfe führt.

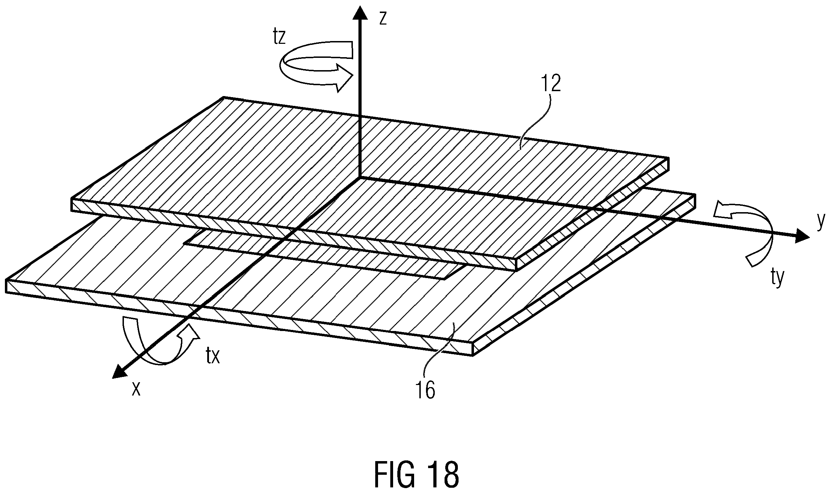

Aufgrund des rotationssymmetrischen Aufbaus von konventionellen Objektiven miniaturisierter Kameras um die optische (z-) Achse verfügen industrielle Montageautomaten zumeist über fünf Freiheitsgrade (und entsprechend fünf Achsen) zur relativen Positionierung der Optik zum Bildsensor (3x Translation entlang x,y,z-Achsen + 2x Verkippung [tx,ty] um x- und y-Achse, wie es bspw. in Fig. 18 dargestellt ist). Die etablierten aktiven Montageprozesse und Maschinen sind somit nicht zur Ausrichtung von Objektiven geeignet, die keine Rotationssymmetrie um die z-Achse aufweisen. Hierzu zählen beispielsweise anamorphotische Objektive, Objektive mit richtungsselektiven Filterkomponenten aber auch Multiapertur-Objektive bestehend aus Mikrolinsenarrays.

Fig. 18 zeigt ein schematisches Bild eines Montageaufbaus einer Multiapertur-Abbildungsoptik 12 zu einem Bildsensorchip 16 mit einer Bezeichnung der notwendigen Freiheitsgrade x,y,z (Translation), tx,ty und tz (Rotation).

Die beiden beschriebenen Einschränkungen sind in Kombination für Multiapertur-Abbildungsobjektive, kurz Multiaperturoptiken, wie etwa sogenannte elektronische Clusteraugen, wie sie auf der WO 2011/045324 A2 bekannt sind, zutreffend. Die Multiapertur-Anordnung besteht aus einem in der x-y-Ebene ein- bzw. zweidimensional ausgedehntem Array von optischen Kanälen, wobei jeder optische Kanal einen definierten Teil des gesamten Objektfeldes erfasst.

Die Lage der Mittenposition der Apertur jedes individuellen optischen Kanals zum Mittelpunkt des zugeordneten Teilbildes (jeweils in x-y-Ebene betrachtet) spielt dabei eine besondere Rolle für die Genauigkeit der Rekonstruktion bzw. das Auflösungsvermögen des Gesamtbildes. Die Differenz der Mittenposition der Apertur zur Mittenposition des zugeordneten Teilbildes (Pitchdifferenz) muss entlang der Translationsfreiheitsgrade in x,y mit einer Genauigkeit zwischen einer halben bis einer Pixelpitch des verwendeten Bildsensors eingestellt werden.

Diese Anordnung einer Multiapertur-Optik ist speziell zur Realisierung miniaturisierter Kameramodule insbesondere mit ultra-dünner Bauform (zum Zwecke der Verwendung in dünnen Geräten wie z. B. Smartphones, Tablets, Laptops etc.) entwickelt worden.

Dementsprechend werden darin Mikrolinsen mit sehr kleinen Brennweiten (z. B. f = 1,2 mm) und somit großer Schärfentiefe eingesetzt. Entsprechend der Formel $dz = 4* l*(Fl\#)^2$ für die Schärfetiefe im Bildraum (dz) bei einer beugungsbegrenzten Abbildung der Wellenlänge W, wird z. B. ein Wert von dz = 12,7 $\mu$m für Licht der Wellenlänge 550 nm und einer Blendenzahl von $F/\# = 2,4$ erreicht.

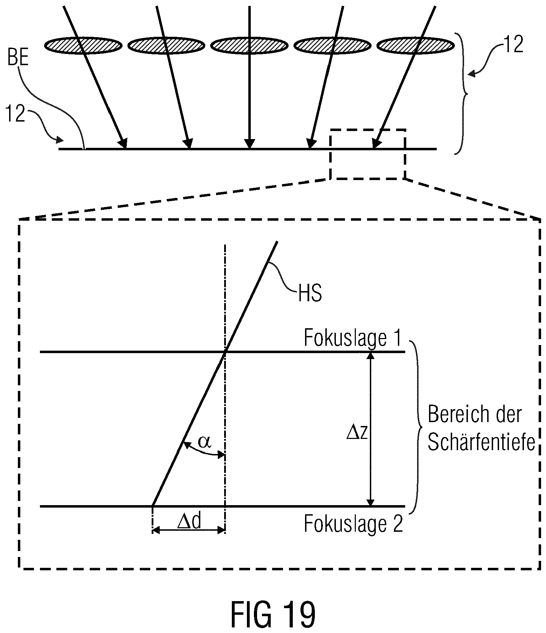

Fig. 19 veranschaulicht schematisch die Anforderungen bezüglich der Ausrichtung von Multiaperturoptiken 12 zu einer Bildebene BE des Bildsensors 16. Die Multiaperturoptik 12 weist mehrere optische Kanäle auf, die in einem eindimensionalen oder zweidimensionalen Array angeordnet sind und ein Zentrum aufweisen. Optische Kanäle, die sich außerhalb des Zentrums befinden, sind ausgebildet, um einen schräg einfallenden Hauptstrahl HS zu empfangen. Man erkennt, dass bei schrägen Lichteinfalls des Hauptstrahls des mittleren Feldpunkts innerhalb eines äußeren optischen Kanals mit dem Winkel alpha "$\alpha$" der Schnittpunkt mit der Fokuslage (= z. B. temporäre Lage des Bildsensors während der Montage) aufgrund der Differenz der z-Position ("$\Delta z$") innerhalb der Schärfentiefe einen lateralen Versatz ("$\Delta d$") erfährt. Bei einer Pixelpitch des Bildsensors von p_px = 2 $\mu$m und des entsprechend großen maximalen lateralen Versatzes, darf der Wert für "$\Delta z$" gemäß der geometrischen Beziehung tan(a) = $\Delta d$ / $\Delta z$ bei einem Einfallswinkel von a = 25° maximal $\Delta z$ = 4,3 $\mu$m betragen. Dieser Wert liegt innerhalb des Schärfentiefenbereichs, so dass bestehende, auf der Auswertung des Bildkontrast basierende, aktive Montageverfahren bei der Anwendung auf Multiapertur-Abbildungsoptiken keine ausreichende Genauigkeit der Objektivausrichtung zum Bildsensor erlauben. Somit zeigt Fig. 19 einen schematischen Schnitt durch ein Multiapertur-Abbildungsobjektiv gemäß WO 2011/045324 A2. Gezeigt sind die Hauptstrahlen für die mittleren Blickrichtungen der optischen Kanäle. Die Vergrößerung zeigt den lateralen Versatz Δd der Mitte des Teilbildes eines äußeren optischen Kanals aufgrund verschiedener Fokuslagen Δz innerhalb des bildseitigen Schärfetiefenbereichs und des Einfallwinkels α des Hauptstrahls HS.

Zur Verdeutlichung wird nachfolgend ein Zahlenbeispiel aufgeführt.

Kameraparameter weisen bspw. eine Brennweite (f) von 1,2 mm, einen Pixelpitch ($p_{px}$) von 2 μm, ein Gesichtsfeld mit einem Öffnungswinkel von 59° horizontal, 46° vertikal (0° diagonal) auf. Ein maximaler Einfallswinkel (α) auf der Bildebene beträgt 25°. Abmessungen des Mikrolinsenarrays betragen(H x B): 7,75 mm x 4,65 mm.

Dies führt zu zugehörige Ausrichtetoleranzen wie folgt: Eine tolerierbare Verschiebung in der x-y-Ebene beträgt maximal 2 Pixel, d. h. $\Delta x \leq 4\ \mu m$ und $\Delta y \leq 4\ \mu m$. Eine tolerierbare Verdrehung um x-,y-Achse (Keilfehler) beträgt maximal einen halber Pixel, d. h. $\Delta t_x = \arctan\left(\frac{p_{px}}{2f}\right) \leq 0{,}05°$ und $\Delta t_y = \arctan\left(\frac{p_{px}}{2f}\right) \leq 0{,}05°$. Eine tolerierbare Verdrehung um z-Achse beträgt maximal ein Pixel in den äußeren Kanälen , d. h. $\Delta t_2 = \arctan\left(\frac{p_{px}}{H/2}\right) \leq 0{,}03°$. Eine Verschiebung in z-Achse (Abstandsfehler) beträgt maximal einen Pixel Versatz (Δd) in äußeren optischen Kanälen ->

$$\Delta z = \frac{\Delta d}{\tan(\alpha)} \leq 4{,}3\ \mu m.$$

Bekannte Verfahren zur Ausrichtung von Optiken zu einem Bildsensor sind beispielsweise als aktive Ausrichtung (engl.: Active Alignment) bekannt und versuchen eine Justage einzelner Linsen oder ganzer Baugruppen zu einem Bildsensor in Abhängigkeit der Qualität (bzw. meist des Kontrastes) des jeweiligen aufgenommenen Bildes einzustellen.

Bekannte Vorrichtungen zur aktiven Kameraobjektiv-Ausrichtung beziehen sich vorrangig auf eine Montage rotationssymmetrischer Optiken, sogenanntes 5D Active Alignment, zu einem Bildsensor in einer Produktionsumgebung und bei großen Stückzahlen. Derartige Geräte und verwendete Montageverfahren sind nicht auf die Bedürfnisse der aktiven Montage von Multiapertur-Objektiven modifizierbar. Beispielsweise ist eine Genauigkeit der verbauten Achsen zu gering. Beispielsweise ist in [1] beschrieben, dass eine x,y,z-Translation mit einer Genauigkeit von ± 5 μm und eine tx,ty, und/oder tz-Verdrehung mit einer Genauigkeit von ± 0,1° einstellbar ist, was gemäß dem vorangehenden Zahlenbeispiel für eine Multiaperturoptik ungenügend ist. Die ungenügende Genauigkeit der Montageprozesse basiert auf einer Evaluation des Bildkontrastes, einer geschlossenen Systemumgebung und entsprechend einem Mangel an Zugriff auf die Ansteuerung des Positioniersystems und das Auslesen der verwendeten Kamerabords. Beispielsweise wird stets das gleiche Testmuster von einem Hersteller der Vorrichtung vorgegeben, unabhängig davon, welcher Kunde (Optikhersteller) die Vorrichtung einsetzt.

Aus US 2013/0047396 ist ein Montagesystem bekannt, welches eine Kombination aus passiver und aktiver Ausrichtung benutzt. Dieses System besitzt die gleichen Limitationen wie vorangehend beschrieben.

Aus der JP 20070269879 ist ein Verfahren der aktiven Kameraoptikmontage mehrerer Kameramodule unter Verwendung der Auswertung des Bildkontrastes bekannt. Auch dieses Verfahren ist für die Erfordernisse von Multiaperturoptiken schwer oder nicht anzupassen.

JP 2013 120295 A bezieht sich auf eine Herstellung eines Mikrolinsenarrays aus drei oder vier Schichten (sheets).

US 2011/001814 A1 bezieht sich auf einen Vergleich von Teilbildern mit einem Gesamtbild und beschreibt, wie eine Abweichung von Teilbildern berechnet werden kann.

JP 2009 092876 A bezieht sich auf ein Konzept zum Koppeln und Fixieren eines Linsenarrays einer Mehr-Linsen-Anordnung an einem Bildsensor.

Alternative Konzepte beschreiben eine aktive Objektivhalterung. Alternativ zur aktiven Ausrichtung und Fixierung können Abbildungsobjektive in Halterungen montiert werden, die eine nachträgliche variable Positionierung zwischen Objektiv und Bildsensor ermöglichen, wie sie beispielsweise in der US 2011/0298968 A1 beschrieben sind. Eine zusätzliche Rückkopplung zu dem Bildsensor, einer Auswerteeinheit oder einem Sensor ermöglicht eine aktive Funktion, wie etwa einen Auto-Fokus oder eine optische Bildstabilisierung. Die dafür notwendigen Konstruktionen sind aufwendig, entsprechend kostspielig und limitieren die Miniaturisierung der Kameramodule. Im Bereich der miniaturisierten Multiaperturoptiken bzw. extrem miniaturisierter Multiapertur-Kameras ist eine Verwendung solcher mikromechanischen Bauelemente bisher aus Kostengründen und zur Verringerung der Baugröße nicht bekannt.

Wünschenswert wäre demnach ein Konzept, das eine Herstellung von Multiapertur-Kameravorrichtungen ermöglicht, die eine erhöhte Bildqualität und geringere Fertigungstoleranzen aufweisen.

Die Aufgabe der vorliegenden Erfindung besteht deshalb darin, eine Vorrichtung zur Positionierung einer Multiaperturoptik zu schaffen, die eine hohe Bildqualität des gefertigten Kameramoduls und geringe Fertigungstoleranzen aufweist.

Diese Aufgabe wird durch den Gegenstand der unabhängigen Patentansprüche gelöst.

Der Kerngedanke der vorliegenden Erfindung besteht darin, erkannt zu haben, dass die obige Aufgabe dadurch gelöst werden kann, dass die Positionierung der Multiaperturoptik gegenüber dem Bildsensor basierend auf einem von dem Bildsensor erfassten Referenzobjekt erfolgen kann, wobei eine Ausrichtung der Multiaperturoptik gegenüber dem Bildsensor basierend auf Positionen, in denen ein Referenzobjekt oder ein Referenzmuster an dem Referenzobjekt in Bildbereichen des Bildsensors abgebildet wird, mit einer hohen Präzision erfolgen kann. Ein Vergleich der Ist-Positionen mit Positionen, etwa globale oder lokale Zentren des Bildsensors, ermöglicht eine Justage basierend auf dem Positionsvergleich.

Gemäß einem Ausführungsbeispiel umfasst eine Vorrichtung zur relativen Positionierung einer Multiaperturoptik ein Referenzobjekt, eine Positioniervorrichtung und eine Berechnungsvorrichtung. Das Referenzobjekt ist angeordnet, so dass das Referenzobjekt durch die Multiaperturoptik in den optischen Kanälen auf einen Bildbereich pro Kanal abgebildet wird. Die Positioniervorrichtung ist steuerbar, um eine relative Lage zwischen der Multiaperturoptik und dem Bildsensor zu ändern. Die Berechnungsvorrichtung ist ausgebildet, um in Bildern des Referenzobjekts in zumindest drei Bildbereichen Ist-Positionen des Referenzobjekts zu bestimmen und basierend auf einem Vergleich der Ist-Positionen mit Positionen die Positioniervorrichtung zu steuern. Bei den Positionen kann es sich beispielsweise um Mittenpositionen oder andere Referenzpositionen in einem jeweiligen und/oder in anderen Bildbereichen handeln. Alternativ oder zusätzlich kann es sich bei den Positionen um Soll-Positionen handeln, die bspw. für den Vergleich hinterlegt sind. Basierend auf dem Vergleich bezüglich der drei Bildbereiche kann eine hohe Bildqualität, eine geringe Positionsabweichung und mithin eine hohe Fertigungstoleranz der Gesamtvorrichtung bezüglich mehrerer oder gar aller Bildbereiche erzielt werden.

Ein weiteres Ausführungsbeispiel schafft eine Vorrichtung, bei der die Berechnungsvorrichtung ausgebildet ist, um eine Fixierungsvorrichtung zu steuern, die ausgebildet ist, um einen Klebstoff, der zwischen der Multiaperturoptik und dem Bildsensor angeordnet ist, auszuhärten. Dies ermöglicht eine Fixierung der eingestellten relativen Position zwischen der Multiaperturoptik und dem Bildsensor.

Ein weiteres Ausführungsbeispiel schafft eine Vorrichtung, bei der der Bildsensor zumindest einen inneren Bildbereich und vier äußere Bildbereiche, die radial um den inneren Bildbereich verteilt angeordnet sind, aufweist. Die vier äußeren Bildbereiche sind entlang einer Roll-Achse, etwa einer x-Achse, und einer Nick-Achse, etwa einer y-Achse, angeordnet. Die äußeren Bildbereiche sind je paarweise gegenüberliegend parallel zu der Roll-Achse und parallel zu der Nick-Achse angeordnet, beispielsweise in einem Rechteck. Die Berechnungsvorrichtung ist ausgebildet, um basierend auf dem Vergleich der Ist-Positionen mit den Positionen eine Musterabweichung eines Musters in dem inneren und den zumindest vier äußeren Bildbereichen zu bestimmen. Dies ermöglicht, eine Zentrierung des Testbildes in dem inneren Bildbereich und eine anschließende Justierung der jeweiligen Bilder in den äußeren Bildbereichen, so dass Positionsabweichungen bezüglich der Roll-Achse, der Nick-Achse und einer Gier-Achse vorteilhaft unter Ausnutzung von Symmetrien der Positionsabweichungen reduziert werden können.

Ein weiteres Ausführungsbeispiel schafft eine Vorrichtung, bei der die Berechnungsvorrichtung ausgebildet ist, um ein Bild, das in dem inneren Bildbereich von dem Referenzobjekt erfasst wird, zu fokussieren, das bedeutet, dass ein Vergrößerungsabstand einen Vergrößerungsabstandssollwert erreicht, um eine Lateraldifferenz der Ist-Position für den inneren Bildbereich basierend auf einer Musterabweichung entlang der Roll-Achse und entlang der Nick-Achse zu bestimmen und um die Positioniervorrichtung so zu steuern, dass die Lateraldifferenzen bezüglich der Roll-Achse und der Nick-Achse einen jeweiligen Sollwert erreichen, so dass das Bild in dem Inneren Bildbereich fokussiert und zentriert erhalten wird. Die Berechnungsvorrichtung ist ferner ausgebildet, um ein Maß für Keilfehlerdifferenzen von Musterabständen für die vier äußeren Bildbereiche zu bestimmen und um die Positioniervorrichtung so zu steuern, dass die Multiaperturoptik bezüglich der Roll-Achse und der Nick-Achse verkippt wird, so dass die Keilfehlerdifferenz einen Roll-Sollwert und/oder einen Nick-Sollwert erreicht. Die Berechnungsvorrichtung ist ferner ausgebildet, um eine Rotationsdifferenz der Musterabweichung für die vier äußeren Bildbereiche entlang einer ersten lokalen und einer zweiten lokalen lateralen Richtung der jeweiligen äußeren Bildbereiche zu bestimmen und um die Positioniervorrichtung so zu steuern, dass diese die Multiaperturoptik um die Gier-Achse dreht, so dass die Rotationsdifferenzen einen Rotationssollwert erreichen. Die Berechnungsvorrichtung ist ferner ausgebildet, um ein Maß für eine Vergrößerungsdifferenz der Musterabweichung für jeden der äußeren Bildbereiche entlang einer Richtung parallel zu der Roll-Achse und entlang einer Richtung parallel zu der Nick-Achse zu bestimmen und um die Positioniervorrichtung so zu steuern, dass diese die Multiaperturoptik entlang der Gier-Achse verschiebt, so dass die Vergrößerungsdifferenzen einen Vergrößerungssollwert erreichen.

Vorteilhaft an diesem Ausführungsbeispiel ist, dass basierend auf der Fokussierung und Zentrierung des Bildes bezüglich des inneren Bildbereichs eine Ausrichtung der Multiaperturoptik bezüglich des Bildsensors in sechs Freiheitsgraden um den inneren Bildbereich ermöglicht wird, so dass eine hohe Präzision der Positionierung erreicht wird.

Gemäß einem weiteren Ausführungsbeispiel ist die Berechnungsvorrichtung ausgebildet, um die Fokussierung und Zentrierung des Bildes bezüglich des inneren Bildbereichs vor einer oder jeder Ausrichtung bezüglich der äußeren Bildbereiche auszuführen, so dass jeder der Keilfehler, Rotationsfehler und/oder Vergrößerungsfehler der äußeren Bildbereiche bezüglich des inneren Bildbereichs reduzierbar ist.

Vorteilhaft an diesem Ausführungsbeispiel ist, dass eine Präzision der Positionierung weiter erhöht wird.

Ein weiteres Ausführungsbeispiel schafft ein Verfahren zur relativen Positionierung der Multiaperturoptik mit mehreren optischen Kanälen relativ zu dem Bildsensor.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:

Fig. 1    ein schematisches Blockschaltbild einer Vorrichtung zur relativen Positionierung einer Multiaperturoptik mit mehreren optischen Kanälen relativ zu einem Bildsensor gemäß einem Ausführungsbeispiel;

Fig. 2    ein schematisches Blockschaltbild einer Vorrichtung, die gegenüber der Vorrichtung aus Fig. 1 dahin gehend erweitert ist, dass eine Berechnungsvorrichtung ausgebildet ist, um eine Fixierungsvorrichtung zu steuern gemäß einem Ausführungsbeispiel;

Fig. 3a    eine schematische Seitenschnittansicht der Multiaperturoptik, die gegenüber dem Bildsensor einen Positionsfehler entlang der negativen Roll-Richtung aufweist gemäß einem Ausführungsbeispiel;

Fig. 3b    eine schematische Aufsicht der Situation aus Fig. 3a gemäß einem Ausführungsbeispiel;

Fig. 4a    eine schematische Seitenschnittansicht der Multiaperturoptik, die gegenüber dem Bildsensor einen Keilfehler bezüglich der Nick-Achse aufweist gemäß einem Ausführungsbeispiel;

Fig. 4b    eine schematische Aufsicht der Situation aus Fig. 4a gemäß einem Ausführungsbeispiel;

Fig. 5    eine schematische Aufsicht auf die Multiaperturoptik, die gegenüber dem Bildsensor um einen Winkel um die Gier-Achse bzw. um die z-Achse verdreht ist gemäß einem Ausführungsbeispiel;

Fig. 6a    eine schematische Seitenschnittansicht der Multiaperturoptik, die gegenüber dem Bildsensor einen zu geringen Abstand entlang der Gier-Achse aufweist gemäß einem Ausführungsbeispiel;

Fig. 6b    eine schematische Aufsicht auf Situation aus Fig. 6a gemäß einem Ausführungsbeispiel;

Fig. 7a    eine schematische Seitenschnittansicht einer Situation, bei der die Multiaperturoptik gegenüber dem Bildsensor einen zu großen Abstand aufweist gemäß einem Ausführungsbeispiel;

Fig. 7b    eine schematische Aufsicht auf die Situation aus Fig. 7a gemäß einem Ausführungsbeispiel;

Fig. 8    ein schematisches Ablaufdiagramm eines Verfahrens zur Behebung eines Versatzes der Multiaperturoptik gegenüber dem Bildsensor durch eine x-Translation und/oder eine y-Translation, wie es für die Fig. 3a und 3b beschrieben ist gemäß einem Ausführungsbeispiel;

Fig. 9    ein schematisches Ablaufdiagramm eines Verfahrens, das von der Berechnungsvorrichtung ausgeführt werden kann, um den Keilfehler, wie sie bzgl. der Fig. 4a und 4b beschrieben sind, auszugleichen gemäß einem Ausführungsbeispiel;

Fig. 10    ein schematisches Ablaufdiagramm eines Verfahrens zur Kompensation einer Verdrehung um die Gier-Achse bzw. um die z-Achse des inneren Bildbereichs, wie sie für die Fig. 5 beschrieben ist, eingesetzt werden gemäß einem Ausführungsbeispiel;

Fig. 11    ein schematisches Ablaufdiagramm eines Verfahrens zur Ausrichtung der Multiaperturoptik durch eine Translation entlang der z-Achse bzw. entlang der GierAchse, wie es für die Fig. 6a, 6b, 7a und 7b beschrieben ist gemäß einem Ausführungsbeispiel;

Fig. 12    ein schematisches Ablaufdiagramm eines Verfahrens, wie es beispielsweise vorangehend zu einem der Verfahren aus einer der Fig. 8, Fig. 9, Fig. 10 oder Fig. 11 ausgeführt werden kann, um einen robusten Verfahrensablauf dieser Verfahren zu ermöglichen gemäß einem Ausführungsbeispiel;

Fig. 13    ein schematisches Ablaufdiagramm eines Verfahrens, bei dem in vorteilhafter Weise hohe Positioniergenauigkeiten entlang der sechs Freiheitsgrade erhalten werden können, gemäß einem Ausführungsbeispiel;

| Fig. 14 | ein schematisches Diagramm zur Verdeutlichung der Zusammenhänge zwischen dem globalen Koordinatensystem und lokaler Koordinatensysteme beispielhaft für einen Bildbereich gemäß einem Ausführungsbeispiel; |
| --- | --- |
| Fig. 15 | eine schematische Darstellung der Abtastung in einer Objektebene durch ein Multiapertur-Objektiv umfassend die Multiaperturoptik und den Bildsensor mit einer 2D-Anordnung von optischen Kanälen gemäß einem Ausführungsbeispiel; |
| Fig. 16 | eine schematische Seitenschnittansicht umfassend die Multiaperturoptik und den Bildsensor zur Verdeutlichung der Zusammenhänge aus Fig. 15 gemäß einem Ausführungsbeispiel; |
| Fig. 17a | eine schematische Seitenschnittansicht einer Multiaperturoptik, die gegenüber dem Bildsensor justiert ist gemäß einem Ausführungsbeispiel; |
| Fig. 17b | eine schematische Aufsicht der Situation aus Fig. 17a gemäß einem Ausführungsbeispiel; |
| Fig. 18 | ein schematisches Bild eines Montageaufbaus einer MultiaperturAbbildungsoptik zu einem Bildsensorchip; und |
| Fig. 19 | eine schematische Seitenschnittansicht zur Veranschaulichung der Anforderungen bezüglich der Ausrichtung von Multiaperturoptiken zu einer Bildebene des Bildsensors gemäß dem Stand der Technik. |

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Im Folgenden wird Bezug genommen auf die Ausrichtung einer Multiaperturoptik und eines Bildsensors mit mehreren Bildbereichen relativ zueinander. Die relative Ausrichtung kann dabei prinzipiell in sechs Freiheitsgraden erfolgen, die eine Translation entlang dreier Raumrichtungen x,y und z sowie eine Rotation um die x-,y- und z-Achse beschreiben.

Ferner beziehen sich nachfolgende Ausführungen auf eine Roll-Achse, eine Nick-Achse und eine Gier-Achse, die zum vereinfachten Verständnis bei einer idealen Ausrichtung der Multiaperturoptik bezüglich des Bildsensors parallel bzw. deckungsgleich zu der x-,y- bzw. z-Achse eines inneren Bildbereichs im Raum angeordnet sind. Dabei beziehen sich x,y und/oder z-Koordinaten auf ein jeweils lokales Koordinatensystem innerhalb eines Bildbereichs des Bildsensors. Roll,- Nick- und/oder Gier-Koordinaten bzw. -Richtungen beziehen sich auf ein globales Koordinatensystem, in welchem der Bildsensor und/oder die Multiaperturoptik angeordnet sind.

Das Koordinatensystem des inneren Bildbereichs des Bildsensors und das (globale) Koordinatensystem, das durch die Roll-, Nick- und Gier-Achse bestimmt ist, können einen gleichen Ursprung und mithin einen gleichen Pivotpunkt (Angelpunkt) aufweisen, wenn bspw. die Multiaperturoptik um den globalen Ursprung verdreht oder bewegt wird. Die Koordinatensysteme werden als kartesische Koordinatensysteme beschrieben, wobei auch die Zugrundelegung anderer Koordinatensysteme denkbar ist. Diese können mittels eine Koordinatentransformation in einander überführbar sein. Nachfolgend beschriebene Ausführungsbeispiele können auch bei Zugrundelegung anderer Koordinatensysteme ohne Einschränkung der Vorteile ausgeführt oder realisiert werden.

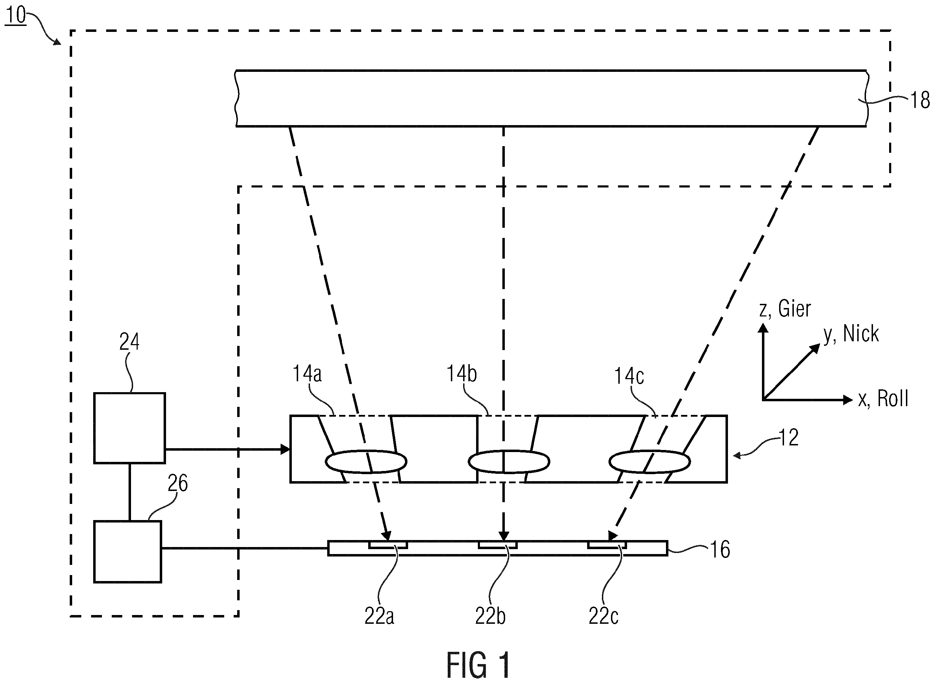

Fig. 1 zeigt ein schematisches Blockschaltbild einer Vorrichtung 10 zur relativen Positionierung einer Multiaperturoptik 12 mit mehreren optischen Kanälen 14a-c relativ zu einem Bildsensor 16. Die Vorrichtung 10 umfasst ein Referenzobjekt 18, das angeordnet ist, so dass das Referenzobjekt 18 durch die Multiaperturoptik 12 in den optischen Kanälen 14a-c auf einen Bildbereich 22a-c pro Kanal abgebildet wird.

Die Vorrichtung 10 umfasst eine Positioniervorrichtung 24, die steuerbar ist, um eine relative Lage zwischen der Multiaperturoptik 12 und dem Bildsensor 16 zu ändern. Vorteilhafterweise ist die Positioniervorrichtung ausgebildet, um die Multiaperturoptik 12 entsprechend sechs Freiheitsgraden im Raum bezüglich des Bildsensors 16 zu bewegen. Es ist jedoch auch vorstellbar, dass die Positioniervorrichtung 24 ausgebildet ist, um den Bildsensor 16 im Raum zu bewegen. Ferner ist vorstellbar, dass die Positioniervorrichtung die Multiaperturoptik 12 oder den Bildsensor 16 entlang weniger als sechs Freiheitsgrade im Raum bewegt.

Die Vorrichtung 10 umfasst ferner eine Berechnungsvorrichtung 26, die ausgebildet ist, um in Bildern des Referenzobjekts 18 in den zumindest drei Bildbereichen 22a-c Ist-Positionen des Referenzobjekts 18 zu bestimmen und um basierend auf einem Vergleich der Ist-Positionen mit Positionen die Positioniervorrichtung 24 zu steuern. Bei der Position kann es sich um Referenzpositionen handeln, auf die das Referenzobjekt 18 in einem justierten Zustand abgebildet wird, etwa Mittenpositionen der Bildbereiche 22a-c (lokal) oder des Bildsensors 16 (global).

Beispielsweise ist die Berechnungsvorrichtung 26 ausgebildet, um das jeweilige Bild in den Bildbereichen 22a-c zu empfangen und auszuwerten. Bei dem Bildsensor kann es sich um ein ladungsgekoppeltes Bauteil (engl.: Charge-Coupled Device - CCD), einen sich ergänzenden Metalloxid-Halbleiter (engl.: Complementary Metal-Oxide-Semiconductor - CMOS) oder einen anderen digitalen Bildsensor handeln.

Die Bildbereiche 22a-c können voneinander beabstandet an oder in dem Bildsensor 16 angeordnet sein. Alternativ können die Bildbereiche 22a-c auch Teil einer durchgehenden Pixel-Matrix sein, die beispielsweise mittels einer voneinander verschiedenen Adressierung der jeweiligen Pixel voneinander unterscheidbar sind. Beispielsweise ist jeder der Bildbereiche 22a-c ausgebildet, um einen Abschnitt des Referenzobjekts 18 zu erfassen. In dem jeweiligen Abschnitt kann beispielsweise ein Testmuster oder ein Teil davon angeordnet sein, so dass das jeweilige Testmuster des jeweiligen Abschnitts in dem jeweiligen Bildbereich 22a-c abgebildet wird, wobei das Testmuster, wenn es angeordnet ist, für einen, mehrere oder alle Bildbereiche 22a-c erfassbar angeordnet sein kann.

Eine definierte Ausrichtung von zwei der Komponenten Multiaperturoptik 12, Bildsensor 16 und Referenzobjekt 18, beispielsweise eine definierte Ausrichtung bzw. Positionierung des Referenzobjekts 18 bezüglich des Bildsensors 16 oder bezüglich der Multiaperturoptik 12 ermöglicht eine Auswertung eines Soll-Bildes, das von dem Referenzobjekt 18 in den Bildbereichen 22a-c erfasst werden soll, wenn die Multiaperturoptik 12 bezüglich des Bildsensors 16 eine fehlerfreie Position oder Ausrichtung aufweist oder innerhalb von akzeptablen Toleranzen angeordnet ist. Die relative Ausrichtung zwischen Multiaperturoptik 12 und Bildsensor 16 kann mithin basierend auf einem Vergleich von Ist-Positionen und (Soll-) Positionen erfolgen. Das bedeutet, dass die Berechnungsvorrichtung ausgebildet ist, um die Positioniervorrichtung basierend auf einem Vergleich der Ist-Position eines Bildbereichs relativ zu Ist-Positionen in anderen Bildbereichen zu steuern.

Gegenüber einer Ausrichtung basierend auf einem Kontrast des erfassten Bildes ermöglicht dies eine hohe Präzision, da der Kontrast basierend auf einem Tiefenschärfenbereich der Multiaperturoptik 12 zu ungenauen oder gar fehlerhaften Ergebnissen führt. Ein Abstand zwischen dem Referenzobjekt 18 und dem Bildsensor 16 kann beispielsweise geringer sein als 2 m, geringer als 1 m oder geringer als 50 cm. Prinzipiell kann der Abstand zwischen dem Referenzobjekt 18 und dem Bildsensor 16 anwendungsabhängig, je nach Ausgestaltung des Bildsensors 16, der Multiaperturoptik 12 und/oder einer angestrebten Vergrößerung oder Auflösung sein.

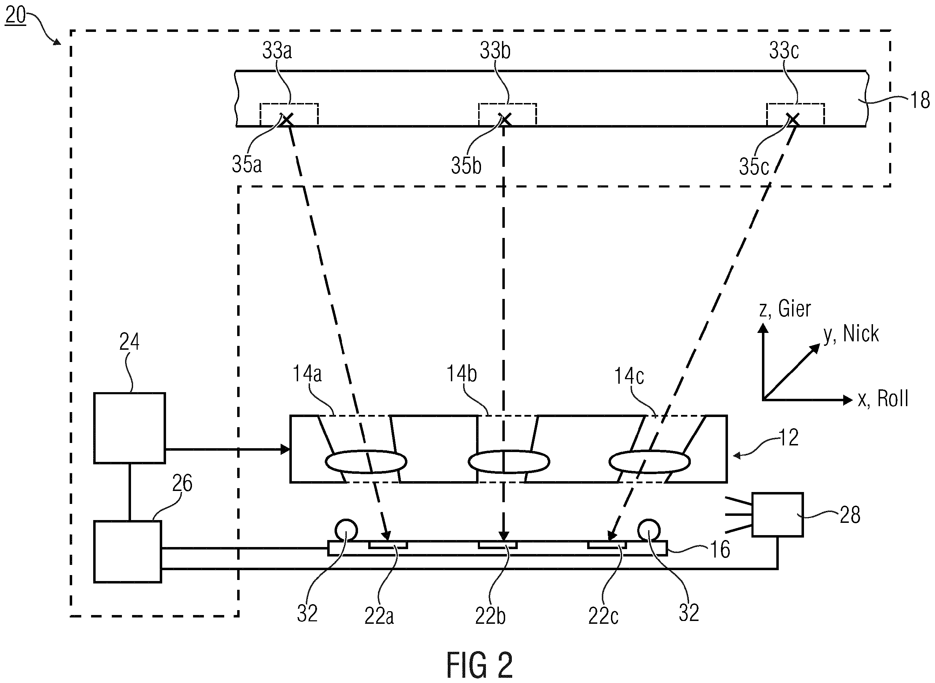

Fig. 2 zeigt ein schematisches Blockschaltbild einer Vorrichtung 20, die gegenüber Vorrichtung 10 dahin gehend erweitert ist, dass die Berechnungsvorrichtung 26 ausgebildet ist, um eine Fixierungsvorrichtung 28 zu steuern. Die Fixierungsvorrichtung 28 ist ausgebildet, um einen Klebstoff 32, der zwischen der Multiaperturoptik 12 und dem Bildsensor 16 angeordnet ist, auszuhärten. Beispielsweise kann, wenn die Multiaperturoptik 12 relativ zu dem Bildsensor 16 positioniert ist, diese mittels des Klebstoffs 32 mit dem Bildsensor 16 kontaktiert sein. Bei dem Klebstoff 32 kann es sich beispielsweise um einen unter ultraviolettem (UV) -Licht aushärtbaren Kleber handeln. Bei der Fixierungsvorrichtung 28 kann es sich beispielsweise um eine UV-Lichtquelle handeln, die basierend auf der Ansteuerung durch die Berechnungsvorrichtung 26 UV-Licht emittiert, um so den Klebstoff 32 auszuhärten. Alternativ kann es sich bei dem Klebstoff 32 um einen unter Temperatur aushärtbaren Kleber handeln, wobei die Fixierungsvorrichtung 28 als Wärmequelle ausgeführt sein kann. Prinzipiell kann die Fixierungsvorrichtung 28 auch ausgebildet sein, um eine andere mechanische Verbindung zwischen dem Bildsensor 16 und der Multiaperturoptik 12 herzustellen, beispielsweise eine Klemm-, eine Schraub-, eine Niet- und/oder eine Lötverbindung.

Vorteilhaft daran ist, dass eine eingestellte Relativposition zwischen der Multiaperturoptik 12 und dem Bildsensor 16 ggf. ohne einen weiteren Zwischenschritt fixiert werden kann und so ein Hinzufügen von Positionierfehlern verhindert werden kann. Alternativ kann die Fixierungsvorrichtung 28 auch Teil der Vorrichtung 20 sein.

An dem Referenzobjekt 18 ist in Referenzbereichen 33a-c ein Muster in Form von Teilmustern bzw. Markierungen 35a-c angeordnet, so dass je ein Teilmuster 35a-c von einem der optischen Kanäle 14a-c erfasst und auf einen jeweiligen Bildbereich 22a-c als Marker abgebildet wird. Dies ermöglicht eine Ausrichtung des Bildsensors 16 zu dem Referenzmuster an dem Referenzobjekt 18 für eine nachfolgende Justierung der Multiaperturoptik, wobei die Ausrichtung bspw. unter Anwendung optischer Gesetze und einer abweichungsfreien Multiaperturoptik erfolgen kann.

Die Verwendung eines Testmusters an dem Referenzobjekt ermöglicht beispielsweise die Auswertung der Bildbereiche 22a-c durch die Berechnungsvorrichtung 26 basierend auf einer Kanten-Detektion in den Bildbereichen 22a-c. Algorithmen hierfür sind präzise und robust einsetzbar. Als Markierungen an dem Referenzobjekt können beispielsweise Kreuze, Kreise oder H-Strukturen geeignet sein, die einer geometrischen Anordnung folgen. Prinzipiell können auch andere Strukturen angeordnet werden, vorzugsweise jedoch solche Strukturen, die eine gegenüber Punktstrukturen große Kantenlänge aufweisen. Obwohl in vorangegangenen Ausführungen eine Anordnung der Marker stets als eine x-Konfiguration beschrieben wurde, ist es ebenfalls vorstellbar, dass die Marker in einer Stern-Konstellation, in einer Kreis-Konstellation oder Ähnlichem erfolgt, wodurch die Marker ggf. in mehr, weniger und/oder andere Bildbereiche auf dem Bildsensor projiziert werden. Die vorangehend beschriebenen Ausführungsbeispiele ermöglichen eine einfache Anpassung der Positionsbestimmungen und der Auswertung der Positionsabweichungen, so dass verschiedene Testmuster einfach anwendbar sind.

Nachfolgende Ausführungen beziehen sich auf Ansteuerungsschritte, die von der Berechnungsvorrichtung 26 an die Positioniervorrichtung 24 übermittelt werden, um diese so anzusteuern, dass die jeweilige Multiaperturoptik bezüglich des Bildsensors im Raum bewegt wird. Die nachfolgend beschriebenen Schritte zur Fehlerkompensation werden in einer Reihenfolge beschrieben, die in vorteilhafter Weise eine präzise Ausrichtung der Multiaperturoptik bezüglich des Bildsensors in sechs Freiheitsgraden ermöglicht. Die Positioniervorrichtung 26 kann alternativ hierzu ausgebildet sein, um lediglich einen oder mehrere der beschriebenen Fehlerkompensationsschritte auszuführen und/oder um diese in einer veränderten Reihenfolge auszuführen.

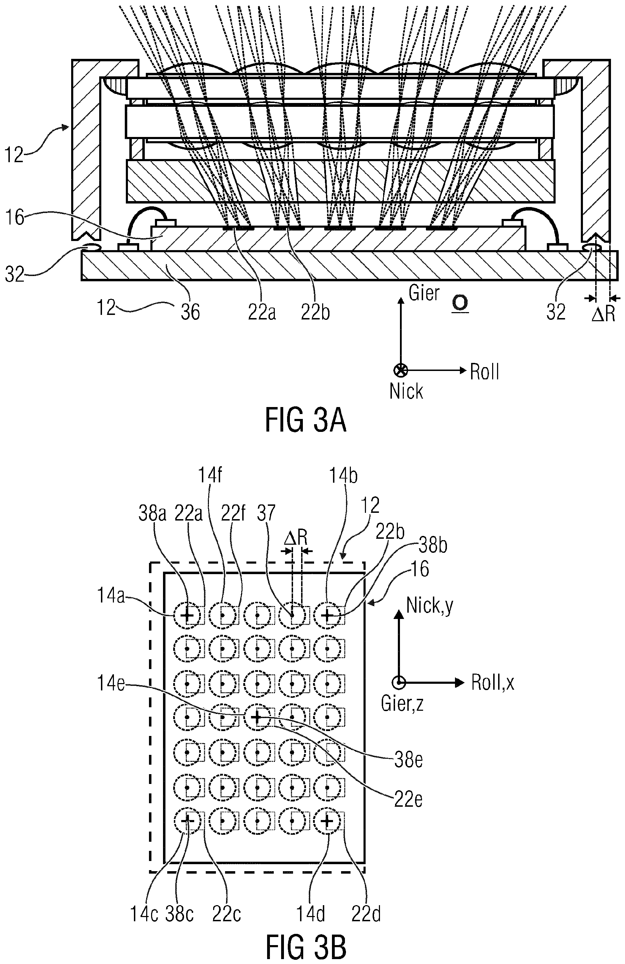

Fig. 3a zeigt eine schematische Seitenschnittansicht der Multiaperturoptik 12, die gegenüber dem Bildsensor 16 einen Positionsfehler entlang der negativen Roll-Richtung aufweist. Fig. 3b zeigt eine schematische Aufsicht dieser Situation. In der Fig. 3a ist der Bildsensor 16 an einer Leiterplatte 36 angeordnet und mit dieser kontaktiert, so dass die erfassten Bilder der Bildbereiche 22a-f von dem Bildsensor 16 von der Berechnungsvorrichtung an der Leiterplatte 36 erhalten werden können.

Ein laterale Positionsfehler entlang der negativen Roll-Richtung führt zu einem relativen Positionsunterschied $\Delta R$ zwischen dem Bildsensor 16 und der Multiaperturoptik 12. Mikrobildzentren der optischen Vorrichtung, d. h. Mittelpunkte 37 der optischen Kanäle 14a-f sind beispielhaft um den Positionsunterschied $\Delta R$ entlang der negativen Roll-Richtung linear verschoben.

Das Referenzobjekt weist eine Testobjektstruktur auf. Dafür sind beispielsweise Markierungen in Form einer oder mehrerer Kreuze "+" als Markierungen, etwa die Markierungen 35, an dem Referenzobjekt angeordnet, die mittels der optischen Kanäle 14a-f in den jeweiligen Bildbereichen 22a-e als Marker 38a-e erfasst werden.

Ein Koordinatenursprung des Koordinatensystems, welches durch die Roll-Achse, die Nick-Achse und die Gier-Achse aufgespannt wird, kann in einem Ursprung des lokalen x/y/z-Koordinatensystems des inneren Bildbereichs 22e angeordnet sein. Eine Berechnungsvorrichtung, beispielsweise die Berechnungsvorrichtung 26 ist ausgebildet, um die Markierung 38e bezüglich des Bildbereichs 22e scharf zu stellen. Hierfür kann die Berechnungsvorrichtung ausgebildet sein, um eine Positioniervorrichtung, beispielsweise die Positioniervorrichtung 24 so anzusteuern, dass diese einen Abstand der Multiaperturoptik 12 gegenüber dem Bildsensor 16 entlang der z-Achse bezogen auf den Bildbereich 22e ändert, so dass der Marker 38e in dem Bildbereich 22e fokussiert ist. Das bedeutet, dass die Berechnungsvorrichtung ausgebildet ist, um ein Maß für einen Vergrößerungsabstand von Musterabständen der Ist-Position (Ort, auf den der Marker 38 abgebildet wird) für den inneren Bildbereich 22e zu bestimmen und um die Positioniervorrichtung so zu steuern, dass diese die Multiaperturoptik 12 entlang der z-Achse bzw. der Gier-Achse verschiebt, so dass der Vergrößerungsabstand einen Vergrößerungsabstandssollwert erreicht. Beispielsweise kann die Berechnungsvorrichtung 26 ausgebildet sein, um eine Ausdehnung des Musters 38e entlang einer oder beider Achsen x und/oder y des inneren Bildbereichs 22e zu bestimmen und mit einem Vergleichswert zu vergleichen. Ist das erfasste Muster des Markers 38e größer bzw. kleiner, so kann ein Abstand zwischen der Multiaperturoptik 12 und dem Bildsensor 16 vergrößert bzw. verkleinert werden.

Die Berechnungseinrichtung ist ausgebildet, um bspw. im Anschluss daran ein Maß für eine Lateraldifferenz der Ist-Position des Markers 38e für den inneren Bildbereich 22e basierend auf der Musterabweichung, beispielsweise bezüglich des Koordinatenursprungs der x- und y-Achse zu bestimmen. Das bedeutet, dass die Berechnungsvorrichtung ausgebildet ist, um ein Maß für eine Lateraldifferenz entlang der x-Achse und ein Maß für eine Lateraldifferenz für eine Musterabweichung entlang der y-Achse zu bestimmen. Die Berechnungseinrichtung ist ausgebildet, um die Positioniervorrichtung so zu steuern, dass die Lateraldifferenzen einen jeweiligen Sollwert erreichen.

Vereinfacht ausgedrückt bedeutet dies, dass die Positioniervorrichtung die Multiaperturoptik 12 bzw. den Bildsensor 16 entlang der x-Achse und/oder der y-Achse (im globalen Koordinatensystem entlang der Roll-Achse und/oder der Nick-Achse) verschiebt, bis die Lateraldifferenzsollwerte erreicht sind. Beispielsweise kann einer oder beide Lateraldifferenzsollwerte durch eine Projektion des Markers 38e in den Koordinatenursprung des lokalen Koordinatensystems des Bildbereichs 22e erreicht werden. Der Toleranzbereich kann beispielsweise durch eine tolerierbare Abweichung, etwa eine Verschiebung um einen oder zwei Pixel, oder durch eine erreichbare Messgenauigkeit definiert sein. Die erreichbare Messgenauigkeit kann beispielsweise auf dem Abstand zweier Pixel basieren, so dass eine Abweichung der Projektion des Markers 38e bezüglich des Koordinatenursprungs des Bildbereichs 22e, die kleiner ist als ein Pixelabstand und gegebenenfalls nicht erfasst wird, als hinreichend genau betrachtet werden kann, so dass der jeweilige Lateraldifferenzsollwert erreicht ist.

Zwischen der Leiterplatte 36 und der Multiaperturoptik 12 ist der Klebstoff 32 angeordnet, so dass eine eingestellte Position der Multiaperturoptik 12 bezüglich des Bildsensors 16 fixierbar ist.

In anderen Worten zeigen die Fig. 3a und 3b einen Versatz des Objektivs durch x-Translation. Ein Positionsfehler aufgrund einer y-Translation kann in der entsprechenden Schnittansicht ein äquivalentes Ergebnisbild erzeugen.

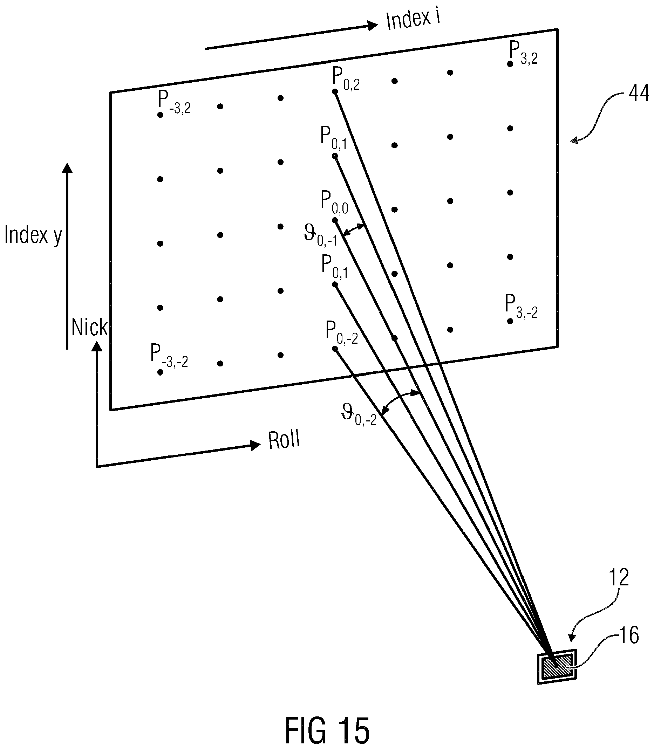

Alle Mikrobildzentren (Mittelpunkt der gestrichelten Kreise) sind in x- und/oder y-Dimension linear gegenüber Mittelpunkten der jeweiligen Bildbereiche um einen Abstand $\Delta R$ entlang der Roll-Achse verschoben. Die Ausrichtung erfolgt gegebenenfalls einzig anhand der bestimmten Bildkoordinaten der Testobjektstruktur (d. h. des Markers 38e) im zentralen optischen Kanal 14e, der die Koordinaten $x_{0,0}$, $y_{0,0}$ aufweist, wobei $x_{i,j}$ bzw. $y_{i,j}$ eine relative Position des jeweiligen Bildbereichs angibt, wie es bspw. für Positionen der auf dem Referenzobjekt für Fig. 15 beschrieben ist.

Zunächst wird das Bild der Testobjektstruktur im zentralen optischen Kanal fokussiert (Translation entlang der z-Achse). Anschließend wird das Objektiv entlang der x- und/oder entlang der y-Achse verschoben, bis das geometrische Zentrum des Bildes des zentralen Testobjekts im Zentrum, das bedeutet im Ursprung des globalen Koordinatensystems O der Bildmatrix befindet. Für die gemessene Bildkoordinate der Testobjektstruktur können die folgenden gleichbedeutenden Bedingungen erfüllt werden:

$$\left(x_{0,0}, y_{0,0}\right) \xrightarrow{gleich} 0 = (0,0)$$

$$r_{0,0} - O = 0$$

mit

$$r_{i,j} = \sqrt{x_{i,j}^2 + y_{i,j}^2}$$

wobei $r_{i,j}$ beispielsweise die radiale Koordinate des Bitfeldes mit den Indices (i,j) im globalen Bildkoordinatensystem beschreibt.

$r_{imax}$, $r_{jmax}$, $r_{-imax}$, und $r_{-jmax}$ beziehen sich auch die radiale Koordinate desjenigen äußere Bildbereichs, der in +i, -i, +j, bzw. -j eine maximale Position bzgl. der Bildbereiche, in die die Marker abgebildet werden, aufweisen.

Da das Ergebnis "null" durch die Differenz der gemessenen Bildkoordinaten im Realfall gegebenenfalls nicht erreicht werden kann, wird entweder eine Rundung des Ergebnisses auf eine der gewünschten Montagepräzision entsprechenden Größe (Vergrößerungsabstandsollwert bzw. Lateraldifferenzsollwerte) oder ein entsprechender Stellwert definiert, unter den die Differenz durch die Regelung fällt, also so dass die Abweichungen innerhalb des Toleranzbereichs sind. Dies trifft ebenso auf die Bedingungen der im Folgenden beschriebenen Feinausrichtungsschritte zu.

Die Fig. 3a und 3b sowie die hierzu beschriebene Ausrichtung der Multiaperturoptik bezüglich des Bildsensors kann als Grobausrichtung vorangehend zu einem, mehreren oder jedem der nachfolgend beschriebenen Justierungsschritte ausgeführt werden.

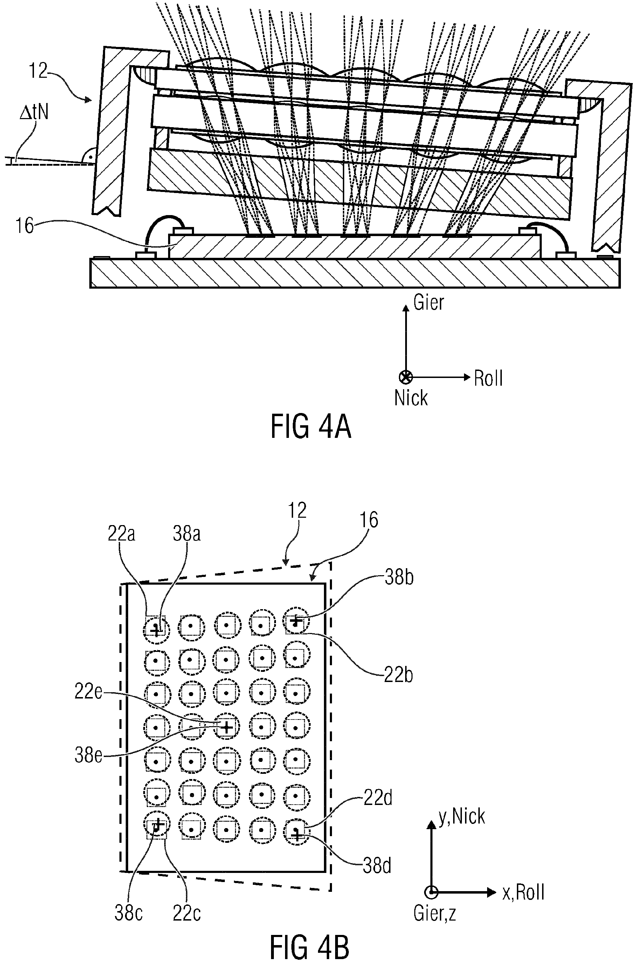

Fig. 4a zeigt eine schematische Seitenschnittansicht der Multiaperturoptik 12, die gegenüber dem Bildsensor 16 einen Keilfehler ΔtN bezüglich der Nick-Achse aufweist. D. h. bezüglich der Nick-Achse ist die Multiaperturoptik 12 gegenüber dem Bildsensor 16 um den Winkel ΔtN verkippt. Fig. 4b zeigt eine schematische Aufsicht der Situation aus Fig. 4a. Das Testmuster an dem Referenzobjekt ist bezüglich des zentralen Bildbereichs 22e zentriert und fokussiert, das bedeutet, dass der Marker 38e so auf den Bildbereich 22e projiziert wird, dass der Abstandsollwert und die Lateraldifferenzsollwerte bezüglich der x-Achse und der y-Achse erreicht sind. Der Keilfehler führt dazu, dass die Marker 38a-d Abweichungen in x- und/oder y-Richtung aufweisen.

Die Berechnungsvorrichtung ist ausgebildet, um die Verschiebungen der Marker 38a-d bezüglich der Mittelpunkte, etwa der geometrischen Mittelpunkte, der Bildbereiche 22a-d zu bestimmen. Wenn beispielsweise die Fokuslage der Multiaperturoptik 12 gegenüber dem Bildsensor 16 Fehler aufweist, kann der Keilfehler dadurch von der Berechnungsvorrichtung bestimmt werden, dass die Abstände der Marker 38a-e bezüglich der Mittelpunkte der Bildbereiche 22a-d jeweils paarweise gleich sind. Ein Paar kann beispielsweise bei einer Drehung der Multiaperturoptik 12 um die Roll-Achse (um die x-Achse - tx) dadurch ausgeglichen werden, dass die Berechnungsvorrichtung die Positioniervorrichtung so ansteuert, dass die Multiaperturoptik 12 um die Roll-Achse gedreht wird, bis die Abstände der Marker 38a und 38c bzw. 38b und 38d bezüglich der jeweiligen Mittelpunkte der Bildbereiche 22a-d gleich sind.

Ferner kann ein Keilfehler, der durch eine Drehung um die Nick-Achse (um die y-Achse - ty) verursacht ist, dadurch kompensiert werden, indem die Berechnungsvorrichtung die Positioniervorrichtung so ansteuert, dass diese die Multiaperturoptik 12 um die Nick-Achse dreht, bis die Abstände der Marker 38a und 38b bzw. 38c und 38d bezüglich der jeweiligen Mittelpunkte der Bildbereiche 22a-d gleich sind. Das bedeutet, dass die jeweiligen Abstände der Marker 38a-d bezüglich der Mittelpunkte der Bildbereiche 22a-d ein Maß für eine Keilfehlerdifferenz von Musterabständen der Ist-Position bezüglich des jeweiligen äußeren Bildbereichs 22a-d aufweisen können und dass die Berechnungsvorrichtung ausgebildet ist, um diese Keilfehlerdifferenz zu bestimmen. Mittels einer Verkippung der Multiaperturoptik 12 bezüglich der Roll-Achse oder der Nick-Achse können die Keilfehlerdifferenzen verändert werden, so dass diese einen Roll-Sollwert oder einen Nick-Sollwert erreichen, der, wie vorhin beschrieben, innerhalb eines Toleranzbereichs um einen Nullwert angeordnet sein kann. Dem Keilfehlerausgleich kann eine Grobausrichtung, wie sie für die fig. 3a und 3b beschrieben ist, vorangehend ausgeführt werden.

In anderen Worten wird für eine Ausrichtung der Multiaperturoptik 12 bei einer Verdrehung tx um die x-Achse und/oder bei einer Verdrehung ty um die y-Achse, das bedeutet bei einem Keilfehlerausgleich, zunächst das Bild der Testobjektstruktur im zentralen optischen Kanal fokussiert, d. h. es erfolgt eine Translation entlang der z-Achse. Anschließend wird das Bild durch eine Verschiebung entlang der x- und/oder der y-Achse im Bildursprung O = (0,0) zentriert. Aufgrund des Keilfehlers ergeben sich unterschiedliche radiale Abstände der gemessenen Position der Bilder der Testobjektstrukturen in den Ecckanälen, d. h. der äußeren Bildbereiche 22a-d, zum jeweiligen Bildursprung. Dies kann zumindest teilweise korrigiert werden, indem das Multiapertur-Objektiv um die x- und/oder der y-Achse (Roll-Achse bzw. Nick-Achse) gedreht wird, bis folgende Bedingungen für die äußeren Bildbereiche 22a-d erfüllt sind:

bei Drehung um x-Achse (tx): $r'_{i\max,j\max} \xrightarrow{gleich} r'_{i\max,-j\max}$ gleichbedeutend mit $r_{i\max,j\max} - r_{i\max,-j\max} = 0$ sowie

$r'_{-i\max,j\max} \xrightarrow{gleich} r'_{-i\max,-j\max}$ gleichbedeutend mit $r_{-i\max,j\max} - r_{-i\max,-j\max} = 0$

bei Drehung um y-Achse (ty): $r'_{i\max,j\max} \xrightarrow{gleich} r'_{-i\max,j\max}$ gleichbedeutend mit $r_{i\max,j\max} - r_{-i\max,j\max} = 0$ sowie

$r'_{i\max,-j\max} \xrightarrow{gleich} r'_{-i\max,-j\max}$ gleichbedeutend mit $r_{i\max,j\max} - r_{-i\max,-j\max} = 0$

Die Keilfehler können achssymmetrisch bezüglich der Roll-Achse (Verdrehung um die Roll-Achse) bzw. bezüglich der Nick-Achse (Verdrehung um die Nick-Achse) für die vier äußeren Bildbereiche sein.

Die Fig. 4a und 4b zeigen somit den Versatz des Objektivs durch Verdrehung um die y-Achse (y-Keilfehler) - die Verdrehung um die x-Achse kann in der entsprechenden äquivalenten Seitenansicht ein äquivalentes Ergebnisbild erzeugen. Die Ergebnisse einer Verdrehung um einen positiven oder negativen Drehwinkel können analog vorherigen Ausführungen ebenfalls bestimmt und/oder kompensiert werden.

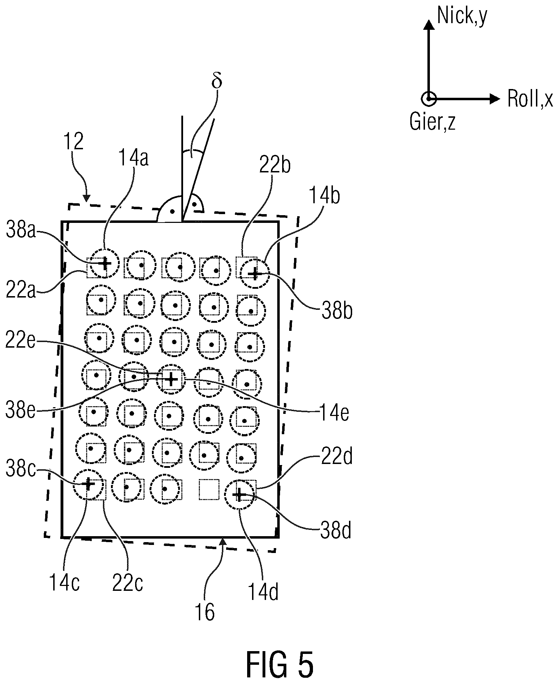

Fig. 5 zeigt eine schematische Aufsicht auf die Multiaperturoptik 12, die gegenüber dem Bildsensor 16 um einen Winkel δ um die Gier-Achse bzw. um die z-Achse des zentralen Bildbereichs 22e verdreht ist. Die Berechnungsvorrichtung ist beispielsweise ausgebildet, um den Abstand der Marker 38a-d von den Zentren der jeweiligen äußeren Bildbereiche 22a-d zu bestimmen. Die Marker 38a-d weisen basierend auf der Drehung um den Winkel δ jeweils einen Abstand von dem jeweiligen Zentrum auf. Dieser ist entlang der jeweiligen x-Richtung für die Bildbereiche 22a und 22b in etwa gleich. Gleichermaßen ist der Abstand für die Bildbereiche 22c und 22d in x-Richtung gleich. In y-Richtung des jeweiligen Bildbereichs ist der Abstand für die Bildbereiche 22a und 22c bzw. 22b und 22d jeweils in etwa gleich. Ein Maß der x-Abstände bezüglich der Bildbereiche 22a und 22b bzw. 22c und 22d sowie ein Maß der Abstände entlang der y-Richtung für die Bildbereiche 22a und 22c bzw. 22b und 22d kann von der Berechnungsvorrichtung als ein Maß für eine Rotationsdifferenz der Musterabweichung für jeden der äußeren Bildbereiche 22a-d bestimmt werden.

Die Berechnungsvorrichtung ist ausgebildet, um die Positioniervorrichtung so zu steuern, dass diese die Multiaperturoptik 12 bzw. den Bildsensor 16 um die Gier-Achse dreht. Die Rotationsdifferenz δ kann mittels der Drehung um die Gier-Achse reduziert werden, bis diese einen Rotationssollwert erreicht, der beispielsweise in einem Toleranzbereich null entspricht. Der Rotationsfehler kann dabei rotationssymmetrisch für die vier äußeren Bildbereiche 22a-d bezüglich des Ursprungs des globalen Koordinatensystems sein.

In anderen Worten wird zur Ausrichtung bei Verdrehung tz um die t-Achse des zentralen Bildbereichs, das bedeutet zur Korrektur der z-Verdrehung zunächst das Bild der Testobjektestruktur im zentralen optischen Kanal fokussiert (Translation entlang der z-Achse) und anschließend durch eine Verschiebung entlang der x- und/oder der y-Achse im Bildursprung O = (0,0) zentriert. Durch die Verdrehung um die z-Achse entsteht eine für symmetrisch um den zentralen inneren Bildbereich 22e positionierte optische Kanäle 14a-d gleich große Verschiebung der Bilder der Teststrukturen 38a-d im jeweils lokalen Koordinatensystem, d. h.:

$r'_{-i\max,j\max} = r'_{-i\max,-j\max} = r'_{i\max,-j\max} = r'_{i\max,j\max}$ mit radialen lokalen Koordinaten $r'_{i,j} = \sqrt{x'^2_{i,j} + y'^2_{i,j}}$ im jeweiligen äußeren optischen Kanal 14a-e mit Index (i,j) bzw. dem zugeordneten Bildbereich 22a-e.

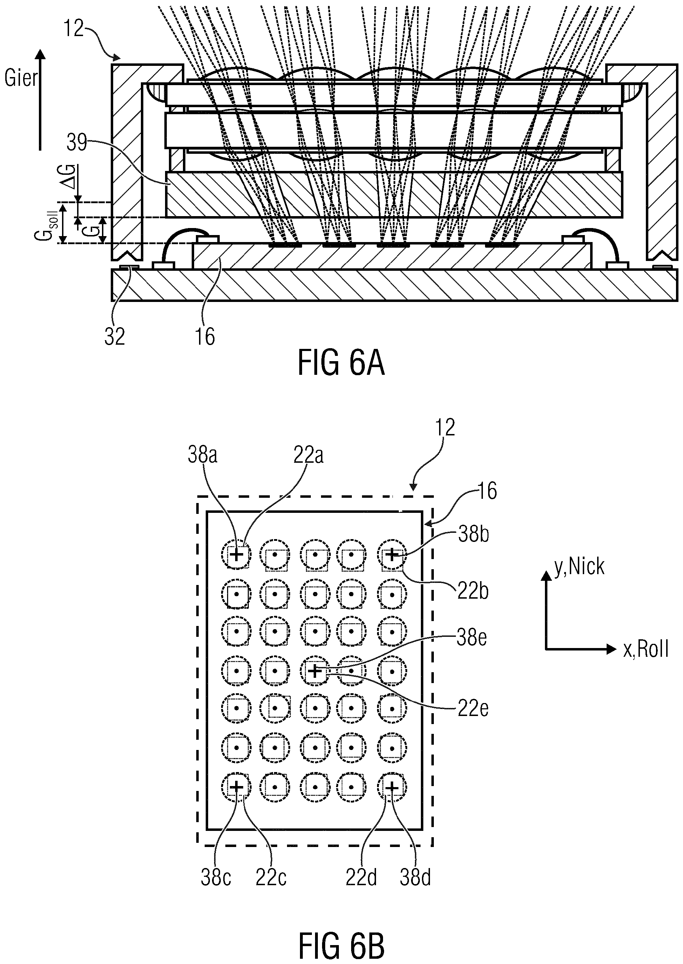

Fig. 6a zeigt eine schematische Seitenschnittansicht der Multiaperturoptik 12, die gegenüber dem Bildsensor 16 einen zu geringen Abstand G gegenüber einem Sollwert G_{soll} entlang der Gier-Achse aufweist. Der Abstand G kann bei der Multiaperturoptik 12 auf einen Abstand zwischen einer dem Bildsensor 16 zugewandten Oberfläche einer falschlichtunterdrückenden Struktur 39 der Multiaperturoptik 12 und einer der falschlichtunterdrückenden Struktur 39 zugewandten Oberfläche des Bildsensors 16 beziehen. Alternativ kann sich der Abstand G auch auf eine Entfernung zwischen einer der Multiaperturoptik 12 zugewandten Oberfläche des Bildsensors 16 und der einer anderen Bezugsebene der Multiaperturoptik 12 beziehen, etwa einer dem Objektbereich oder dem Bildsensor zugewandten Linsenebene oder einer anderen Bezugsebene. Ferner kann sich der Abstand G auch auf eine andere Bezugsebene bzgl. des Bildsensors 16 beziehen, etwa auf eine Oberfläche, an der der Bildsensor 16 an der Leiterplatte 32 angeordnet ist. Der

Sollwert $G_{soll}$ kann sich auf die hintere Schnittweite der Multiaperturoptik 12 bzw. auf den Abstand G zwischen der Multiaperturoptik 12 und dem Bildsensor 16 beziehen, bei dem eine gewünschte oder optimale Schärfe des in die Bildebene projizierten Bildes erhalten werden kann. Der Sollwert $G_{soll}$ kann als Abstandssollwert bezeichnet werden. Alternativ oder zusätzlich kann sich der Sollwert $G_{soll}$ auf einen beliebigen anderen Sollwert eines Abstands zwischen der Multiaperturoptik 12 und dem Bildsensor 16 beziehen. Eine Abweichung, etwa eine Differenz, zwischen dem Abstandssollwert $G_{soll}$ und dem Abstand G kann mit einer Abstandsdifferenz $\Delta G$, bspw. repräsentiert durch $\Delta G = G - G_{soll}$ oder $\Delta G = G_{soll} - G$, bezeichnet werden. Weist die Abstandsdifferenz einen Wert von ungleich 0 auf, kann dies zu einem bestimmbaren Vergrößerungsfehler führen, das bedeutete, der Objektbereich wird ggf. in ein zu großes oder in ein zu kleines Bild abgebildet.

Fig. 6b zeigt eine schematische Aufsicht auf die Multiaperturoptik 12 und den Bildsensor 16 für diese Situation. Verglichen mit einem Abstand G, der korrekt eingestellt ist, so dass bspw. die Abstandsdifferenz $\Delta G$, in etwa einen Wert von 0 aufweist, kann basierend auf dem zu geringen Abstand G und mithin einer Abstandsdifferenz $\Delta G$ mit einem Wert von ungleich 0 (etwa kleiner 0) das Referenzobjekt, das die Marker 38a-e aufweist, vergrößert dargestellt bzw. abgebildet werden. Dies führt dazu, dass entlang der globalen Roll-Achse und Nick-Achse die Marker, die in den äußeren Bildbereiche 22a-d abgebildet werden, einen vergrößerten radialen Abstand bezüglich des Mittelpunkts des zentralen inneren Bilderreiches 22e aufweisen. Bezogen auf die jeweiligen lokalen x/y-Koordinatensysteme bedeutet dies, dass der Marker 38a innerhalb des Bildbereichs 22a hin zu negativen x- und positiven y-Werten, der Marker 38b hin zu positiven x- und positiven y-Werten, der Marker 38c hin zu negativen x- und negativen y-Werten und der Marker 38d hin zu positiven x- und negativen y-Werten verschoben ist. Eine entsprechende Verschiebung ist für entlang der jeweiligen x-Richtung für die Bildbereiche 22b und 22d bzw. 22a und 22c sowie entlang der jeweiligen y-Richtung für die Bildbereiche 22a und 22b bzw. 22c und 22d in etwa gleich, so dass auch hier eine Symmetrie bzgl. es lokalen und/oder globalen Koordinatenursprungs gegeben ist.

Unter Bezugnahme auf Fig. 6a ist die Berechnungsvorrichtung ausgebildet, um ein Maß für die Abstandsdifferenz $\Delta G$ zu bestimmen, indem die Berechnungsvorrichtung beispielsweise für zumindest einen, mehrere oder jeden der äußeren Bildbereiche 22a-d die radialen lokalen Koordinaten bestimmt, in die der jeweilige Marker 38a-d abgebildet wird. Eine Abweichung von dem Nullwert, das bedeutet, dass der jeweilige Marker 38a-d außerhalb des jeweiligen Zentrums (x= 0, y = 0) des jeweiligen Bildbereichs 22a-d positioniert ist, kann als Maß für die Abstandsdifferenz $\Delta G$ der Musterabweichung mittels der Berechnungsvorrichtung bestimmt werden. Die Berechnungsvorrichtung ist ausgebildet, um die Positioniervorrichtung so zu steuern, dass diese die Multiaperturoptik 12 entlang der Gier-Achse verschiebt, so dass die Abstandsdifferenzen $\Delta G$ der Bildbereiche 22a-d den Abstandssollwert $G_{soll}$ erreichen, bspw. indem der Abstand variiert oder verändert wird, bis die Marker 38a-d in den Zentren der Bildbereiche 22a-d abgebildet werden. Der Abstandsdifferenzsollwert kann beispielsweise in einem Toleranzbereich um den NullWert für die Abstandsdifferenz $\Delta G$ oder in dem Toleranzbereich um den Sollwert $\Delta G_{soll}$ angeordnet sein. Die Abstandsdifferenz $\Delta G$ kann nach einer Kompensierung von Kippfehlern, wie es bspw. für die Fig. 4a und 4b beschrieben ist, bzgl. der äußeren Bildbereiche 22a-d gleich sein

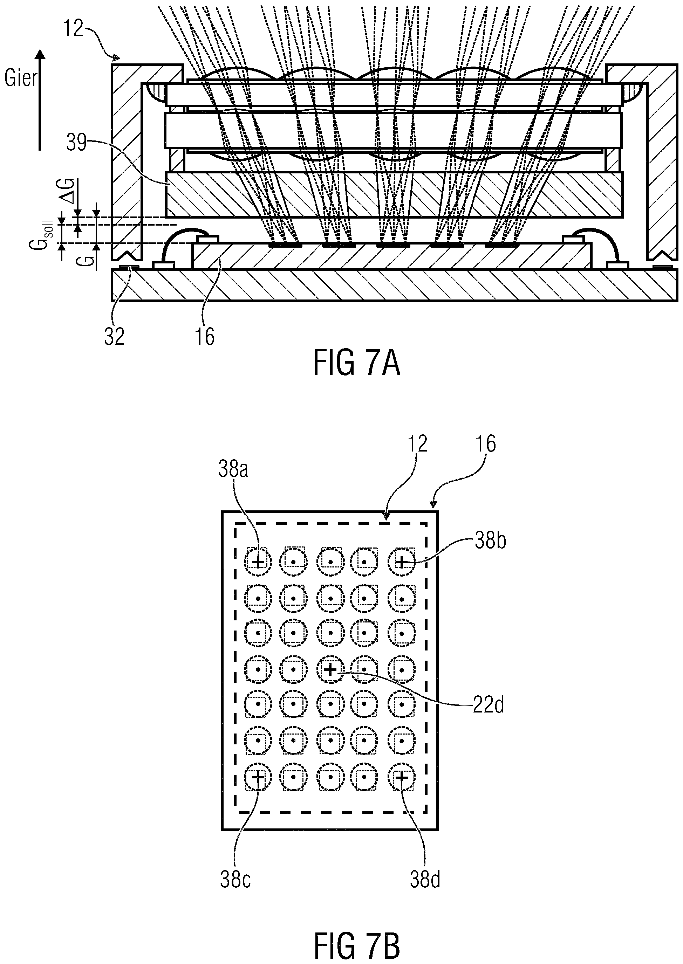

Fig. 7a zeigt eine schematische Seitenschnittansicht einer Situation, bei der die Multiaperturoptik 12 gegenüber dem Bildsensor 16 einen zu großen Abstand G gegenüber dem Sollwert $G_{soll}$ aufweist, d. h. die Marker 38a-d sind jeweils in Richtung des inneren Bildbereichs 22d verschoben. Fig. 7b zeigt eine schematische Aufsicht auf die Situation aus Fig. 7a. Die Berechnungsvorrichtung ist ausgebildet, um die Positioniervorrichtung so zu steuern, dass diese die Multiaperturoptik 12 bzw. den Bildsensor 16 so bewegt, dass der Abstand G und mithin ein Maß für die Abstandsdifferenz $\Delta G$ verringert ist und so dass die Abstandsdifferenzen $\Delta G$ den (Abstandsdifferenz-)Sollwert erreichen.

In anderen Worten soll die Differenz aus Soll-Schnittweite und Ist-Schnittweite soweit möglich reduziert werden. Hierfür kann die Bestimmung der Vergrößerung in dem Bildbereich 22e genutzt werden. Werden durch Herstellungstoleranzen die Soll-Brennweite und somit der Zielwert für die hintere Schnittweite der Optik nicht exakt erreicht, kann nach einer Grobausrichtung die Vergrößerung in dem Bildbereich 22e gemessen und mit dem Wissen um die realisierte Vergrößerung (oder einer daraus abgeleiteten Brennweite) das Testmuster für die Feinausrichtung entsprechend angepasst werden. Ein exakter Zahlenwert für die hintere Schnittweite kann gegebenenfalls vernachlässigt werden.

Hierfür wird bspw. bei einer Ausrichtung bei einer Translation entlang der z-Achse (Korrektur des Abstandsfehlers) zunächst das Bild der Testobjektstruktur im zentralen optischen Kanal grob fokussiert (Translation entlang der z-Achse) und anschließend durch eine Verschiebung entlang der x- und/oder der y-Achse im Bildursprung O = (0,0) zentriert. Im Falle eines zu kleinen z-Abstands des Multiapertur-Objektivs zum Bildsensor werden die Bilder der Teststrukturen in den Ecken des Arrays zu (betragsmäßig) größeren globalen Bildkoordinaten verschoben. Bei einem zu großen Abstand kehrt sich die Verschiebung um, so dass die Bilder der Teststrukturen zu (betragsmäßig) kleineren globalen Bildkoordinaten verschoben sind. Demnach erfolgt eine Variation des z-Abstandes so lange, bis die Bilder der Teststrukturen im Zentrum der jeweiligen Kanäle liegen bzw. die folgende Bedingung unter Berücksichtigung des Toleranzbereichs erfüllt ist:

$$r'_{-i\max, j\max} = r'_{-i\max, -j\max} = r'_{i\max, -j\max} = r'_{i\max, j\max} = 0$$

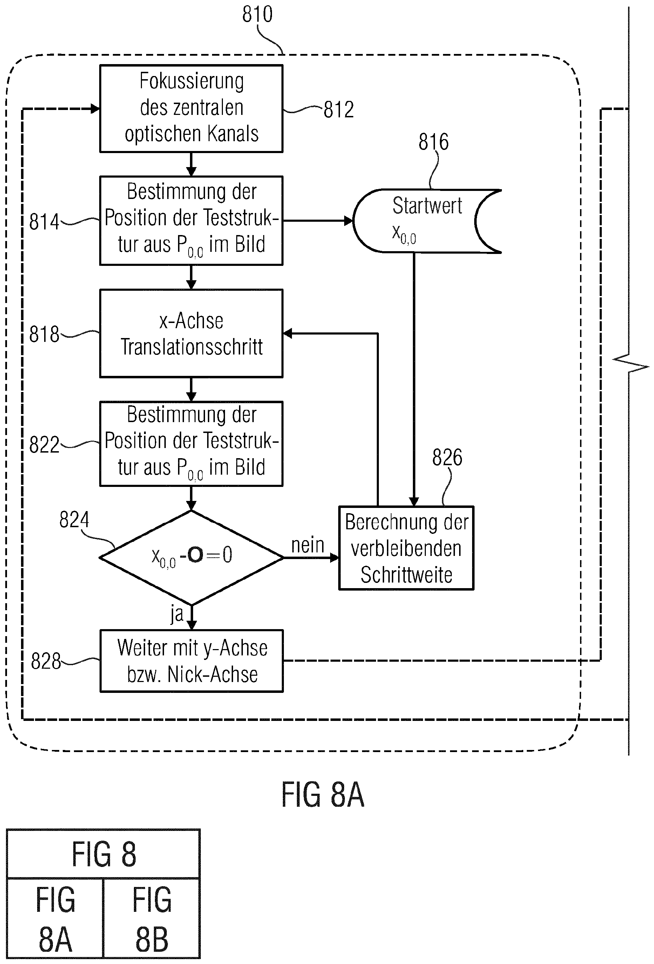

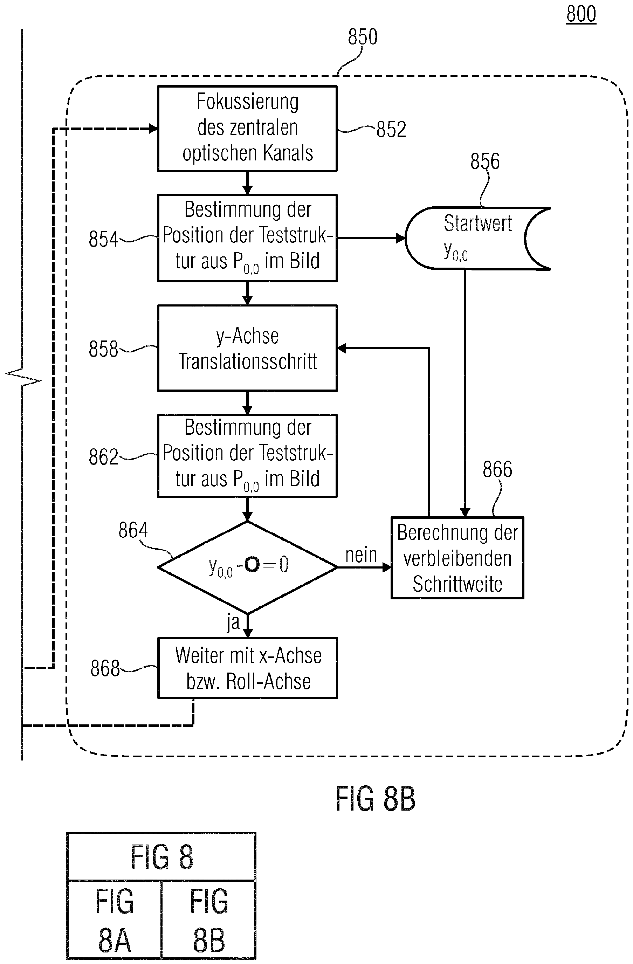

Fig. 8 zeigt ein schematisches Ablaufdiagramm eines Verfahrens 800 zur Behebung eines Versatzes der Multiaperturoptik gegenüber dem Bildsensor durch eine x-Translation und/oder eine y-Translation, wie es für die Fig. 3a und 3b beschrieben ist. Das Verfahren 800 weist zwei Verfahrensabschnitte 810 und 850 auf. Mittels des Verfahrensabschnitts 810 kann ein Positionsfehler entlang der x-Achse bzw. entlang der Roll-Achse kompensiert werden. Mittels des Verfahrensabschnitts 850 kann ein Positionsfehler mittels einer Translation entlang der y-Richtung bzw. entlang der Nick-Richtung kompensiert werden, wobei, nachdem der Verfahrensabschnitt 810 oder 850 durchlaufen ist, in den jeweiligen anderen Verfahrensabschnitt gewechselt oder das Verfahren 800 beendet werden kann. Das Verfahren 800 kann alternativ mit dem Verfahrensabschnitt 810 oder dem Verfahrensabschnitt 850 gestartet werden, wobei nachfolgende Ausführungen beispielhaft einen Start des Verfahrens 800 mittels des Verfahrensabschnitts 810 beschreiben. Das bedeutet, dass die Verfahrensabschnitte 810 und 850 und mithin die Positionskorrektur entlang der x-Richtung und der y-Richtung sequenziell ausführbar ist und mithin der Roll-Sollwert und der Nick-Sollwert sequenziell nacheinander erreicht werden.

In einem Schritt 812 des Verfahrensabschnitts 810 erfolgt eine Fokussierung des zentralen optischen Kanals bzw. eines Teilbereichs des Referenzobjekts bezüglich des zentralen optischen Kanals. In einem Schritt 814, der auf den Schritt 812 folgt, erfolgt, etwa mittels der Berechnungsvorrichtung, eine Bestimmung der Position der jeweiligen Teststruktur, d. h. des Markers, der in dem inneren Bildbereich abgebildet wird, aus $P_{0,0}$ in dem jeweiligen Bild. Die Bestimmung erfolgt somit basierend auf globalen Koordinaten des zentralen optischen Kanals $P_{0,0}$, wie es für Fig. 15 beschrieben ist.

In einem Schritt 816, der auf den Schritt 814 folgt wird die ermittelte Position entlang der Roll-Achse bzw. entlang der lokalen x-Achse als Startwert $x_{0,0}$ hinterlegt, etwa in einem Referenzwertspeicher der Berechnungsvorrichtung.

In einem Schritt 818 wird die Multiaperturoptik gegenüber dem Bildsensor entlang der x-Achse in einem Translationsschritt verschoben. Eine Schrittweite des Translationsschritts kann bspw. eine Schrittweite eines Motors oder Aktuators der Positioniervorrichtung oder einer Steuergröße zur Steuerung der Positioniervorrichtung sein. In einem Schritt 822, der auf den Schritt 818 folgt, wird die Position der Teststruktur aus $P_{0,0}$ in dem inneren Bildbereich bestimmt, wie es für den Schritt 814 beschrieben ist.

In einem Vergleich 824, der auf den Schritt 822 folgt, ist die Berechnungsvorrichtung ausgebildet, um die bestimmte Position mit dem Ursprung des globalen Koordinatensystems O zu vergleichen, beispielsweise durch eine Differenzbildung. Weist die Differenz innerhalb eines Toleranzbereichs einen Wert von ungleich null auf (Entscheidung "nein") so ist die Berechnungsvorrichtung ausgebildet, um in einem Schritt 826 basierend auf dem in dem Schritt 816 hinterlegten Startwert eine verbleibende Schrittweite zu berechnen und in den Zustand 818 zu wechseln, um einen weiteren Translationsschritt entlang der x-Achse auszuführen. Weist in der Entscheidung 824 die Differenz einen Wert innerhalb des Toleranzbereichs von null auf (Entscheidung "ja"), so kann die Multiaperturoptik gegenüber dem Bildsensor entlang der x-Achse bzw. entlang der Roll-Achse als ausgerichtet bezeichnet werden, so dass ein Ende 828 erreicht ist, von welchem aus in den Verfahrensabschnitt 850 gewechselt werden kann. D. h. der Schritt 818 wird ggf. so lange wiederholt, bis der Roll-Sollwert erreicht ist.

In einem Schritt 852 des Verfahrensabschnitts 850 erfolgt eine Fokussierung des empfangenen Bildes, etwa des Markers 38e bezüglich des zentralen optischen Kanals, etwa des optischen Kanals 14e. In einem Schritt 854, der auf den Schritt 852 folgt, wird die Position der Teststruktur in dem Bild bestimmt. Die bestimmte Position entlang der Nick-Achse bzw. der lokalen y-Achse wird in einem Schritt 856 als Startwert $y_{0,0}$ hinterlegt.

In einem Schritt 858, der ebenfalls auf den Schritt 854 folgt, wird ein Translationsschritt entlang der y-Achse bzw. entlang der Nick-Achse ausgeführt, d. h. eine Relativposition zwischen dem Bildsensor und der Multiaperturoptik wird entlang der y-Achse verändert. In einem Schritt 862, der auf den Schritt 858 folgt, wird die Position der Teststruktur in dem inneren Bildbereich erneut bestimmt. Wie es für die Entscheidung 824 beschrieben ist, erfolgt in einer Entscheidung 864, die auf den Schritt 862 folgt, ein Vergleich, ob die Position $y_{0,0}$ mit dem Zentrum des globalen Koordinatensystems O übereinstimmt. Ist dies nicht der Fall, d. h. liefert die Entscheidung eine Antwort "nein", erfolgt in einem Schritt 866 eine Berechnung der verbleibenden Schrittweite basierend auf der Position und dem in dem Schritt 856 hinterlegten Startwert. Von dem Schritt 866 aus wird in den Schritt 858 zurückgewechselt und ein erneuter Translationsschritt entlang der y-Achse ausgeführt. Dies erfolgt so lange, bis die Entscheidung 864 das Ergebnis "ja" liefert, so dass die Multiaperturoptik bezüglich des Bildsensors entlang der y-Achse als ausgerichtet betrachtet werden kann und in einem Schritt 868 in den Verfahrensabschnitt 810 bzw. den Schritt 812 gewechselt werden kann. Alternativ kann nach der Entscheidung 824 bzw. 864, wenn diese mit "ja" beantwortet ist, das Verfahren 800 beendet werden. Das bedeutet, dass die Berechnungsvorrichtung ausgebildet ist, um die Positioniervorrichtung basierend auf einem Vergleich der Ist-Position eines Bildbereichs mit einer Soll-Position, etwa dem Koordinatenursprung, bezüglich des Bildbereichs zu vergleichen.

In anderen Worten zeigt Fig. 8 eine zusammenfassende Übersicht der Feinausrichtung zur Zentrierung. Der Prozess kann äquivalent entweder in der x- oder der y-Dimension gestartet werden.

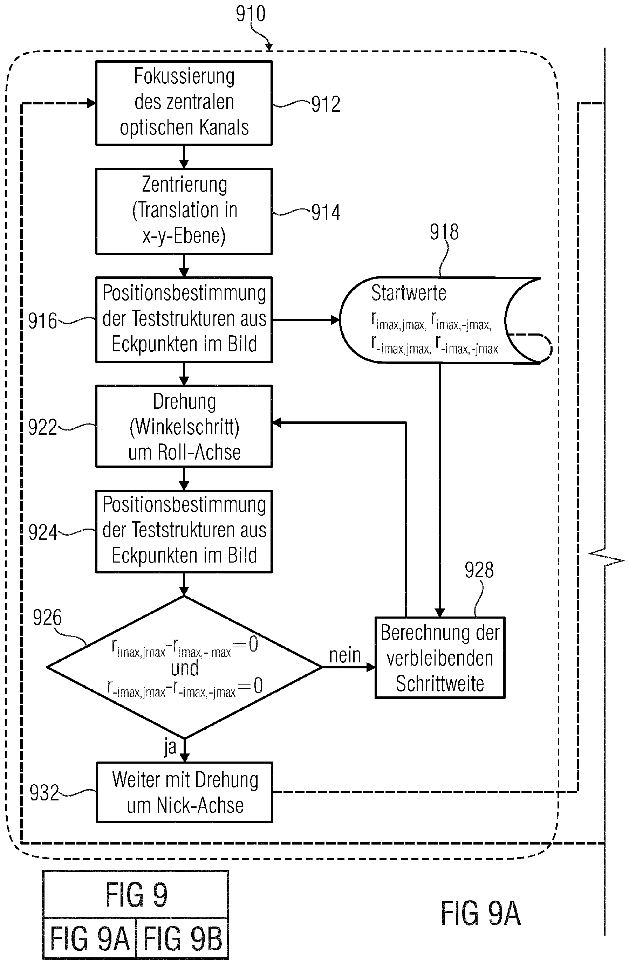

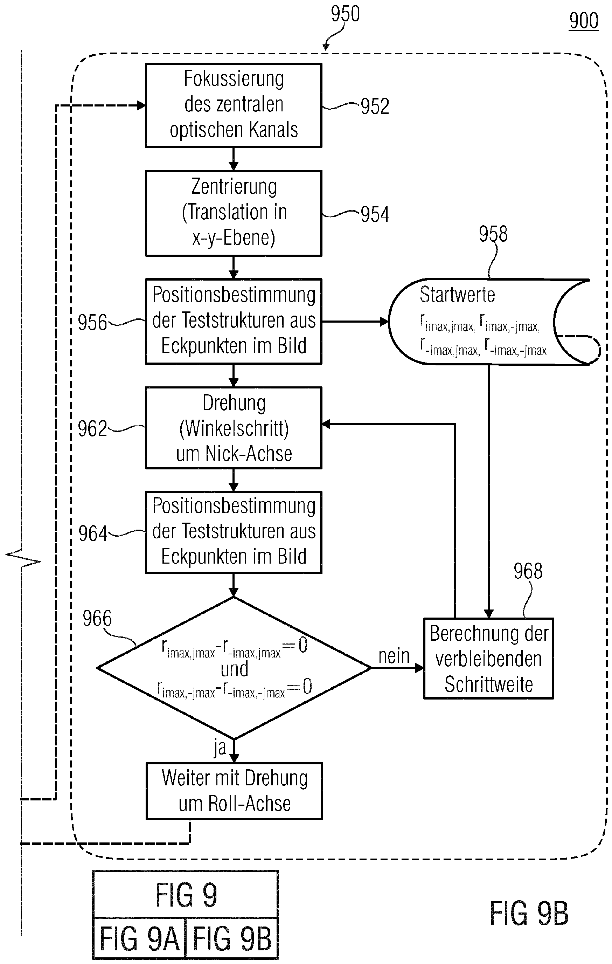

Fig. 9 zeigt ein schematisches Ablaufdiagramm eines Verfahrens 900, das von der Berechnungsvorrichtung ausgeführt werden kann, um den Keilfehler, wie sie bzgl. der Fig. 4a und 4b beschrieben sind, auszugleichen. Das Verfahren 900 umfasst einen Verfahrensabschnitt 910 und einen Verfahrensabschnitt 950. Mittels des Verfahrensabschnitts 910 kann der Keilfehler bezüglich der x-Achse, d. h. bezüglich der Roll-Achse reduziert oder kompensiert werden. Mittels des Verfahrensabschnitts 950 kann der Keilfehler bezüglich der y-Achse, d. h. bezüglich der Nick-Achse reduziert oder kompensiert werden. Die Verfahrensabschnitte 910 und 950 sind unabhängig voneinander ausführbar, wobei von dem Verfahrensabschnitt 910 in den Verfahrensabschnitt 950 übergegangen werden kann, oder von dem Verfahrensabschnitt 950, wenn dieser durchlaufen ist, in den Verfahrensabschnitt 910 übergegangen werden. Das bedeutet, dass das Verfahren 900 mit dem Verfahrensabschnitt 910 oder mit dem Verfahrensabschnitt 950 begonnen werden kann.

Beispielhaft wird das Verfahren 900 im Nachfolgenden so beschrieben, dass es mit dem Verfahrensabschnitt 910 begonnen wird. In einem Schritt 912 erfolgt eine Fokussierung des zentralen optischen Kanals, etwa des optischen Kanals 14e bezüglich des Bildbereichs 22e. Der Schritt kann gleich ausgeführt werden, wie der Schritt 812. In einem Schritt 914, der auf den Schritt 912 folgt, erfolgt eine Zentrierung des zentralen optischen Kanals mittels einer Translation in der x-y-Ebene. Der Schritt 914 kann gleich ausgeführt werden, wie der Schritt 814.

In einem Schritt 916, der auf den Schritt 914 folgt, erfolgt eine Positionsbestimmung der Teststrukturen aus Eckpunkten im Bild, das bedeutet, dass beispielsweise die äußeren Referenzmarkierungen, beispielsweise die Marker 38a-d bezüglich ihrer jeweiligen, äußeren Bildbereiche und ihrer Position darin bestimmt werden. Die bestimmten Positionen werden in einem Schritt 918 als Startwerte für die nachfolgende Positionierung hinterlegt. Ein Startwert $r_{imax,jmax}$, $r_{imax,-jmax}$, $r_{-imax,jmax}$ und $r_{-imax,-jmax}$ kann jeweils die Position der Teststruktur in den äußeren Bildbereichen mit der maximalen (oder negativ-maximalen) Richtung entlang der Roll-Achse (i) bzw. der Nick-Achse (j) beschreiben.

Ausgehend von dem Schritt 916 wird in einem Schritt 922 die Positioniervorrichtung so gesteuert, dass die Multiaperturoptik gegenüber dem Bildsensor um die Roll-Achse in einem Winkelschritt gedreht wird. In einem Schritt 924, der auf den Schritt 922 folgt, wird, wie es in dem Schritt 916 ausgeführt wurde, eine Positionsbestimmung der Teststrukturen aus Eckpunkten im Bild durchgeführt. In einer Entscheidung 926, die auf die Positionsbestimmung in dem Schritt 924 folgt, erfolgt ein Abgleich, ob die Radienabstände bzw. die Differenz $r_{imax,jmax} - r_{imax,-jmax}$ innerhalb des Toleranzbereichs einen Wert von 0 aufweist und ob eine Differenz $r_{-imax,jmax} - r_{-imax,-jmax}$ innerhalb des Toleranzbereichs einen Wert von 0 aufweist, das bedeutet, es wird bestimmt, ob das Maß für die Keilfehlerdifferenz einen Roll-Sollwert oder einen Nick-Sollwert erreicht.

Wird die Entscheidung 926 mit "nein" beantwortet, das bedeutet, ist zumindest einer der Roll-Sollwerte oder Nick-Sollwerte nicht erreicht, erfolgt in einem Schritt 928 eine Berechnung der verbleibenden Schrittweite unter Berücksichtigung der in dem Schritt 918 hinterlegten Startwerte. Von dem Schritt 928 ausgehend wird in den Schritt 922 zurück gewechselt, um eine erneute Drehung um einen Winkelschritt um die Roll-Achse auszuführen. Wird hingegen die Entscheidung 926 mit "ja" beantwortet, d. h. sind beide Sollwerte erreicht, kann der Keilfehler bezüglich der Drehung um die Roll-Achse als kompensiert angesehen werden und von einem Endzustand 932 ausgehend in den Verfahrensabschnitt 950 übergegangen werden oder das Verfahren beendet werden.

In einem Schritt 952 des Verfahrensabschnitts 950 erfolgt eine Fokussierung des zentralen optischen Kanals, wie es für den Schritt 912 beschrieben ist. In einem Schritt 954, der auf den Schritt 952 folgt, erfolgt eine Zentrierung des zentralen optischen Kanals, wie es für den Schritt 914 beschrieben ist. In einem Schritt 956, der auf den Schritt 954 folgt, erfolgt eine Positionsbestimmung der äußeren Teststrukturen aus Eckpunkten im Bild, wie es für den Schritt 916 beschrieben ist. Basierend auf dem Schritt 946 erfolgt eine Hinterlegung der Startwerte in einem Schritt 958, wie es für den Schritt 918 beschrieben ist. In einem Schritt 962, der auf den Schritt 956 folgt, wird die Positioniervorrichtung so gesteuert, dass die Multiaperturoptik bezüglich der Nick-Achse gedreht (verkippt) wird. Das bedeutet, dass auch dieser Schritt analog zu dem Verfahrensabschnitt 910, bzw. dem Schritt 922 ausgeführt wird, mit dem Unterschied, dass die Drehung um die Nick-Achse erfolgt. In einem Schritt 964, der auf den Schritt 962 folgt, erfolgt eine Positionsbestimmung, wie sie beispielsweise in dem Schritt 956 durchgeführt wurde, um eine Positionsveränderung, die durch den Schritt 962 erreicht wurde, zu bestimmen.

In einer Entscheidung 966 wird überprüft, ob die Keilfehlerdifferenzen den Nick-Sollwert erreicht haben. Dies kann beispielsweise durch eine Differenzbildung $r_{imax,jmax} - r_{-jmax,jmax}$ sowie $r_{imax,-jmax} - r_{-imax,-jmax}$ erfolgen. Die Differenzen können überprüft werden, ob sie in dem Toleranzbereich den Wert 0 einnehmen, das bedeutet, dass die jeweiligen Abweichungen einer Differenzbildung $r_{imax,jmax}$, $r_{-imax,jmax}$, $r_{imax,-jmax}$ und $r_{-imax,-jmax}$ gleich groß sind. Wir die Entscheidung mit "nein" beantwortet, so wird in einem Schritt 968 unter Berücksichtigung der Startwerte aus dem Schritt 958 eine Berechnung der verbleibenden Schrittweite durchgeführt und in den Schritt 962 zurück gewechselt, um eine erneute Drehung der Multiaperturoptik um die Nick-Achse auszuführen. Hat die Keilfehlerdifferenz den Nick-Sollwert in der Entscheidung 966 erreicht (Entscheidung "ja"), so kann der Nick-Keilfehler als kompensiert angesehen werden und das Verfahren beendet oder in den Verfahrensabschnitt 910 gewechselt werden.

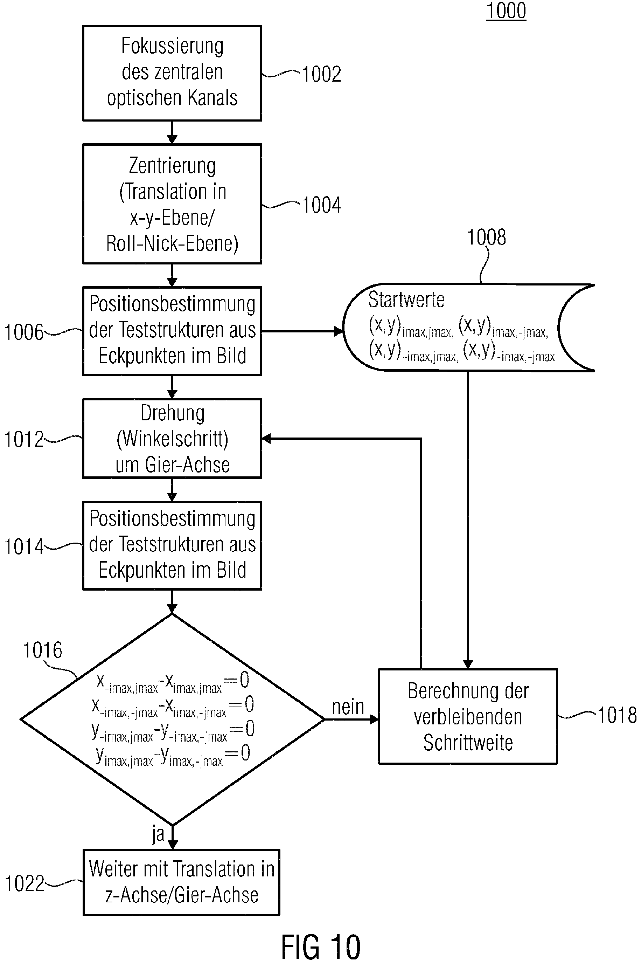

Fig. 10 zeigt ein schematisches Ablaufdiagramm eines Verfahrens 1000 zur Kompensation einer Verdrehung um die Gier-Achse bzw. um die z-Achse des inneren Bildbereichs 22e. Das Verfahren 1000 kann zur Kompensation einer Fehlersituation, wie sie für die Fig. 5 beschrieben ist, eingesetzt werden. In einem Schritt 1002 erfolgt eine Fokussierung des zentralen optischen Kanals, wie es für die Schritte 812, 852, 912 und 952 beschrieben ist. In einem Schritt 1004 erfolgt eine Zentrierung des inneren Bildbereichs, wie es für die Schritte 814, 854, 914 oder 954 beschrieben ist. In einem Schritt 1006, der auf den Schritt 1004 folgt, werden ebenfalls die Positionen der Teststrukturen, d. h. der Marker 38a-d, aus Eckpunkten im Bild bestimmt. Die Positionen werden beispielsweise als in dem jeweiligen Bildbereich, etwa einer der äußeren Bildbereiche 22a-d lokal bestimmt und als Startwerte $(x,y)_{imax,jmax}$, $(x,y)_{-imax,jmax}$ und $(x,y)_{-imax,-jmax}$ hinterlegt (Schritt 1008).

In einem Schritt 1012 wird die Positioniervorrichtung so gesteuert, dass die Multiaperturoptik bezüglich der Gier-Achse bzw. der z-Achse des inneren Bildbereichs eine Drehung um zumindest einen Winkelschritt ausführt. Der Winkelschritt kann bspw. eine Schrittweite eines Motors oder eines Aktuators, der die Multiaperturoptik bewegt, oder eine Steuerungsgröße der Positioniervorrichtung sein.

In einem Schritt 1014, der auf den Schritt 1012 folgt, erfolgt eine erneute Positionsbestimmung, wie es für den Schritt 1006 beschrieben ist. In einer Entscheidung 1016, die auf die Positionsbestimmung 1014 folgt, wird überprüft, ob die Rotationsdifferenz einen Rotationssollwert erreicht hat, etwa durch eine Differenzbildung $x_{-imax,jmax} - x_{imax,jmax} = 0$, $x_{-imax,-imax} - x_{imax,-jmax} = 0$, $y_{-imax,jmax} - y_{-imax,-jmax} = 0$ und/oder $y_{imax,jmax} - y_{imax,-jmax} = 0$, wobei auch hier der 0-Wert toleranzbehaftet ist. Ist zumindest eine der Gleichungen nicht erfüllt, d. h. die Entscheidung 1016 liefert die Antwort "nein", wird in den Schritt 1018 gewechselt, in welchem unter Berücksichtigung der in dem Schritt 1008 hinterlegten Startwerte eine Berechnung der verbleibenden Schrittweite erfolgt. Von dem Schritt 1018 ausgehend wird in den Schritt 1012 zurückgewechselt und eine erneute Drehung der Multiaperturoptik ausgeführt. Sind hingegen in der Entscheidung 1016 alle Gleichungen erfüllt, d. h., liefert die Entscheidung das Ergebnis "ja", so kann der Rotationsfehler als kompensiert angesehen werden und das Verfahren 1000 in einem Schritt 1022 beendet werden. Von dem Schritt 1022 kann beispielsweise in die Kompensation der Vergrößerungsfehler durch eine Translation der Multiaperturoptik entlang der z-Achse bzw. der Gier-Achse übergegangen werden.

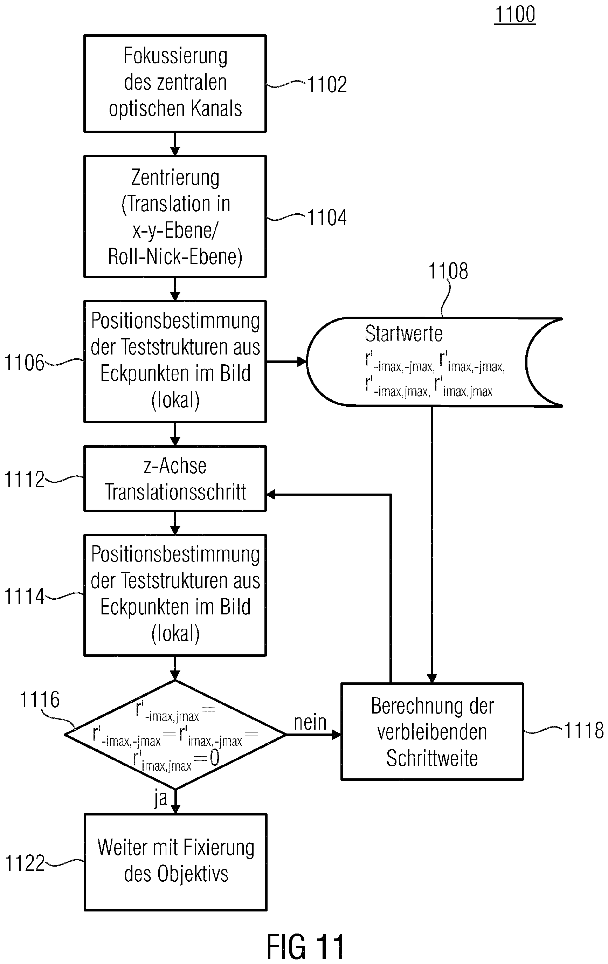

Fig. 11 zeigt ein schematisches Ablaufdiagramm eines Verfahrens 1100 zur Ausrichtung der Multiaperturoptik durch eine Translation entlang der z-Achse bzw. entlang der Gier-Achse, wie es für die Fig. 6a, 6b, 7a und 7b beschrieben ist.

In einem Schritt 1102 erfolgt eine Fokussierung des zentralen optischen Kanals. In einem Schritt 1104, der auf den Schritt 1102 folgt, erfolgt eine Zentrierung mittels einer Translation in x/y, wie es beispielsweise für den Schritt 914 beschrieben ist.

In einem Schritt 1106, der auf den Schritt 1104 folgt, erfolgt eine Positionsbestimmung der Textstrukturen aus Eckpunkten im Bild, wobei die Positionsbestimmung unter Verwendung der jeweiligen lokalen Koordinatensysteme der äußeren Bildbereiche 22a-d erfolgen kann. Die bestimmten Positionen werden in einem Schritt 1108 als Startwerte $r'_{-imax,-jmax}$, $r'_{imax,-jmax}$, $r'_{-imax,jmax}$ und $r'_{imax,jmax}$ hinterlegt. In einem Schritt 1112, wird von dem Schritt 1106 ausgehend eine Translation entlang der z-Achse bzw. entlang der Gier-Achse ausgeführt, d. h. die Positioniervorrichtung wird so angesteuert, dass die Multiaperturoptik entlang der Gier-Achse verschoben wird.

In einem Schritt 1114, der auf den Schritt 1112 folgt, erfolgt eine erneute lokale Positionsbestimmung, wie es für den Schritt 1106 beschrieben ist. In einer Entscheidung 1116 erfolgt eine Überprüfung, ob die in dem Schritt 1114 bestimmten Positionen dem jeweiligen lokalen Koordinatenursprüngen entsprechend, etwa in Form einer Gleichung $r'_{-imax,jmax} = r'_{-imax,-jmax} = r'_{imax,-jmax} = r'_{imax,jmax} = 0$. Das bedeutet, es erfolgt eine Überprüfung, ob eine Abstandsdifferenz einen Abstandsdifferenzsollwert erreicht. Ein Maß für die Abstandsdifferenz kann hier beispielsweise mittels der Differenz (Abstand) zwischen einem detektierten Ort, an dem das jeweilige Testmuster projiziert wird, und dem lokalen Koordinatenursprung erhalten werden. Liefert die Entscheidung 1116 das Ergebnis "nein" erfolgt in einem Schritt 1118 eine Berechnung der verbleibenden Schrittweite unter Berücksichtigung der Startwerte, die in dem Schritt 1108 hinterlegt wurden. Von dem Schritt 1118 wird beispielsweise in den Schritt 1112 zurück gewechselt, um eine erneute Positionsänderung der Multiaperturoptik bezüglich des Bildsensors auszuführen. Liefert die Entscheidung 1116 das Ergebnis "ja" kann der Vergrößerungsfehler, d. h. etwa die Abweichung $\Delta G$ entlang der Gier-Achse als kompensiert betrachtet werden und das Verfahren 1100 beendet werden. Beispielsweise kann von einem Endschritt 1122 das Verfahren 1100 eine Fixierung des Objektivs initiiert werden.

Fig. 11 kann als eine Zusammenfassung der Übersicht der Feinausrichtung der Translation entlang der z-Achse beschrieben werden.

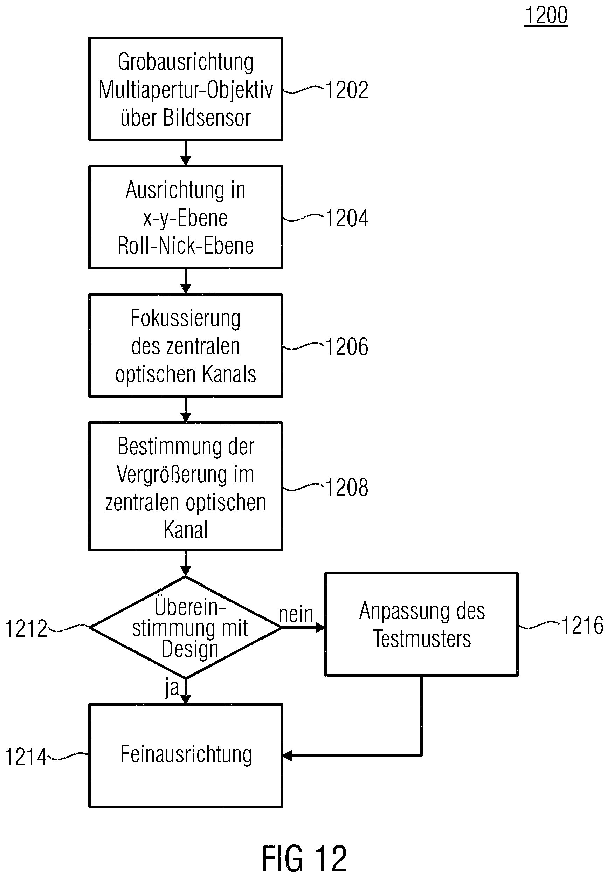

Fig. 12 zeigt ein schematisches Ablaufdiagramm eines Verfahrens 1200, wie es beispielsweise vorangehend zu einem der Verfahren 800, 900, 1000 oder 1100 ausgeführt werden kann, um einen robusten Verfahrensablauf dieser Verfahren zu ermöglichen. In einem Schritt 1202 erfolgt eine Grobausrichtung des Multiapertur-Objektivs, d. h. der Multiaperturoptik bezüglich des Bildsensors. Dies kann beispielsweise eine Ausrichtung des Bildsensors bezüglich des Testmusters so umfassen, dass die Testmarker 38 auf die entsprechenden Bildbereiche 22 des Bildsensors projiziert werden. Ferner kann die Multiaperturoptik so angeordnet werden, dass die Marker weiterhin auf die Bildbereiche projiziert werden. Dies kann beispielsweise durch einen Schritt 1204, der auf den Schritt 1202 folgt, ergänzt werden, in dem eine Ausrichtung der Multiaperturoptik bezüglich des Bildsensors durch eine Ausrichtung in der x/y-Ebene bzw. in der Roll-/Nick-Ebene ausgeführt wird, bis die Textmarker in den Bildbereichen abgebildet werden. In einem Schritt 1206 erfolgt eine Fokussierung des zentralen optischen Kanals.

In einem Schritt 1208, der auf den Schritt 1206 folgt, erfolgt eine Bestimmung der Vergrößerung im zentralen optischen Kanal bzw. für den inneren Bildbereich. Dies kann beispielsweise durch eine Vermessung der Bildgröße (Ist-Größe) eines Testobjekts, d. h. des Referenzobjekts, erfolgen. Da die optischen Eigenschaften der Multiaperturoptik sowie die Abstände zwischen dem Referenzobjekt und den Bildbereichen bekannt sind, kann dies aufgrund der optischen Gesetze erfolgen. In einer Entscheidung 1212, die auf den Schritt 1208 erfolgt, wird überprüft, ob die bestimmte Vergrößerung mit dem gewählten Design des Testmusters übereinstimmt. Wird die Entscheidung 1212 mit "ja" beantwortet, wird in einem Schritt 1214 übergegangen, in dem eine Feinausrichtung der Multiaperturoptik bezüglich des Bildsensors, etwa durch eines oder mehrere der Verfahren 800, 900, 1000 und/oder 1100 erfolgt.

Liefert die Entscheidung 1212 das Ergebnis "nein" wird in einem Schritt 1216 eine Anpassung des Testmusters ausgeführt und anschließend in den Schritt 1214 gewechselt. Es kann somit bestimmt werden, ob das Testmuster für den jeweiligen Bildsensor und/oder die Multiaperturoptik geeignet ist. Eine Anpassung des Testmusters kann bspw. eine Änderung einer oder mehrerer Positionen und/oder Formen des Musters umfassen, so dass das Testmuster in die Bildbereiche projiziert werden kann.

In anderen Worten erfolgt der aktive Ausrichtungsprozess der Multiaperturoptik zum Bildsensor anhand der Auswertung der relativen und absoluten Positionen der von den Objektstrukturen durch die einzelnen optischen Kanäle erzeugten Bilder in der Bildmatrix.

Zur praktischen Durchführung wird das Optikmodul zunächst grob zum Bildsensor ausgerichtet und ein fokussiertes Bild im zentralen optischen Kanal eingestellt. Im nächsten Schritt wird die Vergrößerung m im zentralen optischen Kanal durch die Vermessung der Bildgröße eines Testobjekts B (Objektmaß im Bild: B = Anzahl der Pixel entlang der gemessenen Objektkante * Pixelpitch) entsprechend der bekannten Formel $m = \frac{B}{G}$ ermittelt. Die Größe G ist darin die Gegenstandsgröße, also die bekannte Ausdehnung des Testobjektes in der Objektebene. Diese wird entsprechend der Objektentfernung (s) mit den aus der Optikkonstruktion bekannten Parametern des Multiapertur-Objektivs (z. B. Größe des Gesichtsfeldes eines optischen Kanals) vorgegeben. Aus der berechneten Vergrößerung ergibt sich die tatsächlich durch den Herstellungsprozess erzeugte Brennweite (f) des zentralen optischen Kanals gemäß:

$$f = \frac{s}{\left( \frac{1}{m} - 1 \right)}$$

In dieser Form der Gleichung ist die Objektentfernung (s) mit negativem Vorzeichen einzusetzen.

Die reale Brennweite (f) des zentralen Kanals kann aber auch zuvor durch andere Methoden (z. B. ein Autokollimationsverfahren, optisches Antasten oder berührungslose Profilmessungen u. Ä.) bestimmt werden bzw. bereits bekannt sein. Bei Abweichung der realen Brennweite von der durch die Optikkonstruktion angestrebten Brennweite tritt bei der Fokussierung des Multiapertur-Objektivs eine Skalierung der geometrischen Verteilung der mittleren Blickrichtungen innerhalb der Objektebene ein. Somit muss in diesem Fall die für die aktive Ausrichtung vorausgesetzte Platzierung der Objektstrukturen angepasst werden (siehe Abbildung 7). Die Ermittlung der neuen Schnittpunkte der mittleren Blickrichtungen der optischen Kanäle mit der Objektebene kann mittels der Änderung der Brennweite auf den realen Wert aus dem Optikdesign (z. B. Raytracing Simulationssoftware) geschehen.

In anderen Worten zeigt Fig. 12 eine zusammenfassende Übersicht des Ablauf der Vorbereitung des Feinausrichtungsprozesses. Mittels des Verfahrens 1200 wird das Referenzobjekt so angeordnet, dass das Referenzobjekt durch die Multiaperturoptik in den optischen Kanälen auf einen Bildbereich pro Kanal abgebildet wird.

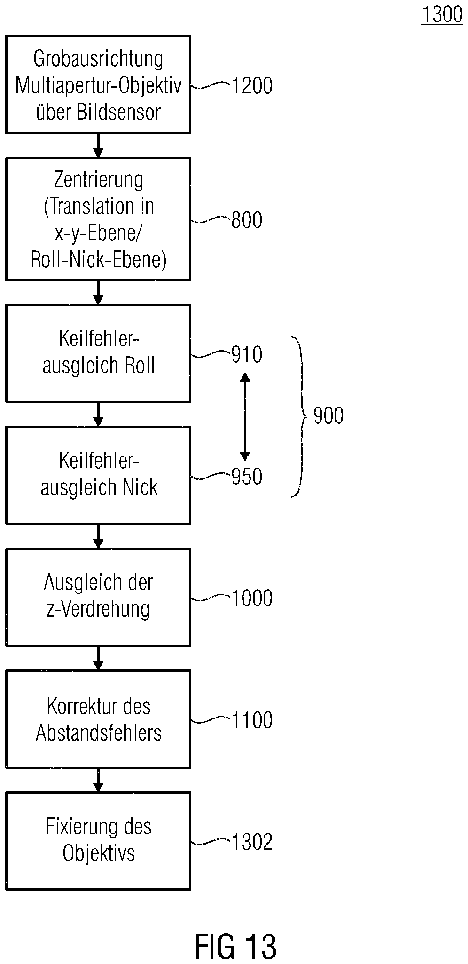

Fig. 13 zeigt ein schematisches Ablaufdiagramm eines Verfahrens 1300, bei dem in vorteilhafter Weise Positionierungenauigkeiten entlang der sechs Freiheitsgrade reduziert bzw. kompensiert werden. In einem ersten Schritt wird das Verfahren 1200 zur Grobausrichtung der Multiaperturoptik bezüglich des Bildsensors ausgeführt. Im Anschluss an das Verfahren 1200 wird das Verfahren 800 ausgeführt, so dass eine Zentrierung mittels Translation in x-y-Ebene ausgeführt ist. Im Anschluss an das Verfahren 800 erfolgt ein Keilfehlerausgleich entlang der Roll-Achse durch Ausführen des Verfahrensabschnitts 910. Im Anschluss an den Verfahrensabschnitt 910 wird der Verfahrensabschnitt 950 zum Ausgleich des Keilfehlers bezüglich der Nickachse ausgeführt. Die Verfahrensabschnitte 910 und 950 können auch in einer anderen Reihenfolge ausgeführt werden und bilden gemeinsam das Verfahren 900. Im Anschluss an das Verfahren 900 wird das Verfahren 1000 zum Ausgleich der z-Verdrehung (bzw. Gier-Verdrehung) ausgeführt. Im Anschluss an das Verfahren 1000 wird das Verfahren 1100 zur Korrektur des Abstandsfehlers ausgeführt. Im Anschluss an das Verfahren 1100 kann eine Fixierung 1302 des Objektivs erfolgen. In anderen Worten kann im Anschluss an den Gesamtprozess der Feinausrichtung das Multiapertur-Objektiv in der ausgerichteten Position, beispielsweise durch eine Klebeverbindung des Gehäuses mit der Leiterplatte fixiert werden.

Alternativ kann das Verfahren 1300 mit einer veränderten Reihenfolge der einzelnen Teilverfahren ausgeführt werden. Alternativ oder zusätzlich kann auch lediglich eines oder mehrere der Verfahren 800, 900, 1000, 1100 und/oder 1200 ausgeführt werden.

In anderen Worten liegt zu Beginn des Montageprozesses das zuvor assemblierte Multiapertur-Objektiv ggf. integriert in einem lichtdichten Gehäuse und getrennt davon der bereits auf einer Leiterplatte kontaktierte und auslesbare Bildsensor vor (siehe Beispieldarstellung aus Abbildung 3). Der Bildsensor wird für den Prozess der aktiven Ausrichtung so positioniert, dass die Verbindungslinie zwischen dem Mittelpunkt des Bildfeldes (= geometrischer Mittelpunkt der Pixelmatrix) und dem Mittelpunkt der Objektebene (= Testmusterebene) senkrecht zur Bildebene steht und somit der Normalen auf dem Bildsensor entspricht. Dies ist vorteilhaft durch die Aufnahme des Bildsensors bzw. der Leiterplatte auf der dieser integriert ist, zumindest in guter Näherung erfüllt. Zur Durchführung des aktiven Ausrichtungsverfahrens können die folgenden Voraussetzungen an die Montagevorrichtung bestehen. Die Montagevorrichtung umfasst vorteilhafterweise eine Vorrichtung zur gegenüber dem Testmuster ausgerichteten Aufnahme des Bildsensors auf Leiterplatte inklusive einer Ausleseschnittstelle; eine Vorrichtung zur Aufnahme des Multiapertur-Objektivs (z. B. Greifer, mechanisch, pneumatisch, per Vakuum etc.); eine Vorrichtung zur Änderung der relativen Position des Objektivs gegenüber dem Bildsensor in sechs Freiheitsgraden (Translation in x, y & z-Richtungen sowie Verdrehung um x, y & z-Achsen) wobei für die drei Rotationsfreiheitsgrade ein gemeinsamer Drehmittelpunkt (Pivot-Punkt) nahe dem Mittelpunkt des Multiapertur-Objektivs eingestellt werden kann; ein Testmuster oder Schirm einer Musterprojektion in geeignetem Abstand (= Objektabstand) vom Multiapertur-Objektiv, welches oder welches hinreichend homogen ausgeleuchtet wird; eine Bildauslese und Bildauswertvorrichtung mit Schnittstelle zur Ansteuerung der Steller/Motoren zur Veränderung der relativen Lage des Objektivs zum Bildsensor (z. B. PC mit Auswert- & Steuerungssoftware); und ein Algorithmus zur Bildsegmentierung, Objekterkennung und Positionsbestimmung der vom Testmuster durch die Multiapertur-Optik auf den Bildsensor abgebildeten Strukturen.

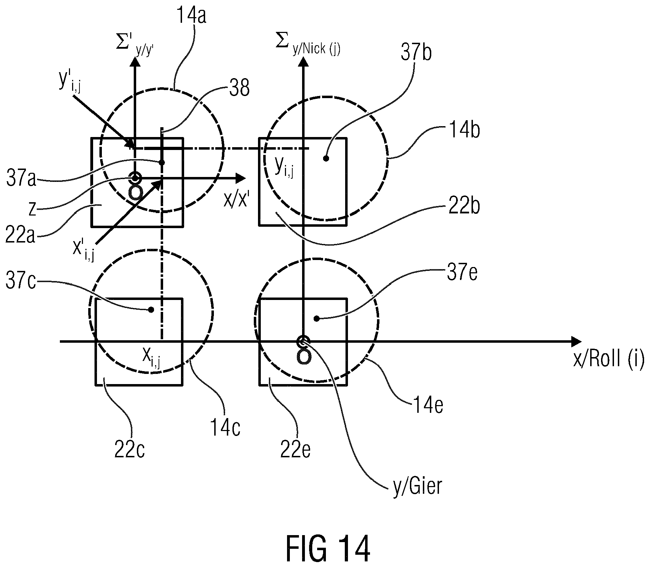

Fig. 14 zeigt ein schematisches Diagramm zur Verdeutlichung der Zusammenhänge zwischen dem globalen Koordinatensystem $\Sigma$ und lokaler Koordinatensysteme $\Sigma'$ beispielhaft für den Bildbereich 22a. Wie es beispielsweise für die Fig. 3a und 3b beschrieben ist, weist das globale Koordinatensystem $\Sigma$ den Schnittpunkt der Roll-Achse, der Nick-Achse und der Gier-Achse auf, wobei der gemeinsame Schnittpunkt ebenfalls ein gemeinsamer Dreh-Punkt (Pivot-Punkt) der Bewegung um die sechs Freiheitsgrade sein kann, die die Positioniervorrichtung bezüglich der Multiaperturoptik initiiert. Bezüglich des Bildbereichs 22e ist der optische Kanal 14e der Multiaperturoptik angeordnet, wobei der optische Kanal 14e den optischen Mittelpunkt 37e aufweist.

Die Bildbereiche 22a-c weisen jeweils ein lokales Koordinatensystem $\Sigma'$ mit einer x-Achse, einer y-Achse und einer z-Achse auf, deren gemeinsamer Schnittpunkt im geometrischen Mittelpunkt des Bildbereichs 22a-c angeordnet ist. Die lokalen Koordinatensysteme $\Sigma'$ können beispielsweise ein kartesisches Koordinatensystem sein, bei dem sich die Achsen x,y und z in einem rechten Winkel zueinander im Mittelpunkt schneiden. Eine Position des Markers 38, der in den Bildbereich 22a projiziert wird, kann sowohl mit lokalen Koordinaten $y'_{i,j}$ und/oder $x'_{i,j}$, als auch den globalen Koordinaten $y_{i,j}$ und/oder $x_{i,j}$ angegeben werden. Die Indizes i,j können beispielsweise Indizes sein, die einen Nummerierung der Bildbereiche 22a-d entlang der Roll-Achse und/oder der Nick-Achse angeben.

In anderen Worten zeigt Fig. 14 eine Skizze zur Beschreibung der Koordinaten in der Bildebene des Multiapertur-Kameramoduls in einer Aufsicht. Das globale Koordinatensystem in der Bildebene $\Sigma$ hat seinen Ursprung im geometrischen Mittelpunkt des Bildfeldes, während das lokale Koordinatensystem $\Sigma'$ seinen Ursprung im geometrischen Mittelpunkt des Bildfeldes des jeweiligen optischen Kanals besitzt. Es ist ein Fall gezeigt bei dem die Bildkreise von vier benachbarten optischen Kanälen (gestrichelte Kreise mit Mittelpunktmarkierung) nicht optimal zu den für jeden Kanal zugeordneten Bildfeldern (Quadrate) auf dem Bildsensor ausgerichtet sind. Das im linken oberen optischen Kanal gezeigte Kreuz stellt das Bild einer in der Objektebene an entsprechend vorgegebener Stelle positionierten Objektstruktur dar wie es durch den zugeordneten optischen Kanal erzeugt wird.

Fig. 15 zeigt eine schematische Darstellung der Abtastung in einer Objektebene 44 durch ein Multiapertur-Objektiv umfassend die Multiaperturoptik 12 und den Bildsensor 16 mit einer 2D-Anordnung von optischen Kanälen. Die Punkte $P_{i,j}$ markieren den Schnittpunkt der jeweiligen mittleren Blickrichtung des jeweiligen optischen Kanals (i,j) im fehlerfreien Fall mit der Objektebene.

Die Objektebene ist beispielsweise so dargestellt, dass diese in *i*-Richtung mit sieben optischen Kanälen und in j-Richtung mit fünf optischen Kanälen abgetastet wird, das bedeutet $i_{max} = 3$, $-i_{max} = -3$, $j_{max} = 2$, $-j_{max} = -2$. An den Orten $P_{-3,2}$, $P_{3,2}$, $P_{-3,-2}$ und $P_{3,-2}$ können die Marker 38 angeordnet werden. Ein Marker 38 kann ebenfalls an dem Ort $P_{0,0}$ angeordnet werden. Alternativ können die Marker auch an einer anderen Position in dem Objektbereich 44 bzw. an dem Referenzobjekt angeordnet werden, wobei eine beschriebene maximale Distanz zwischen den Markern vorteilhaft ist.

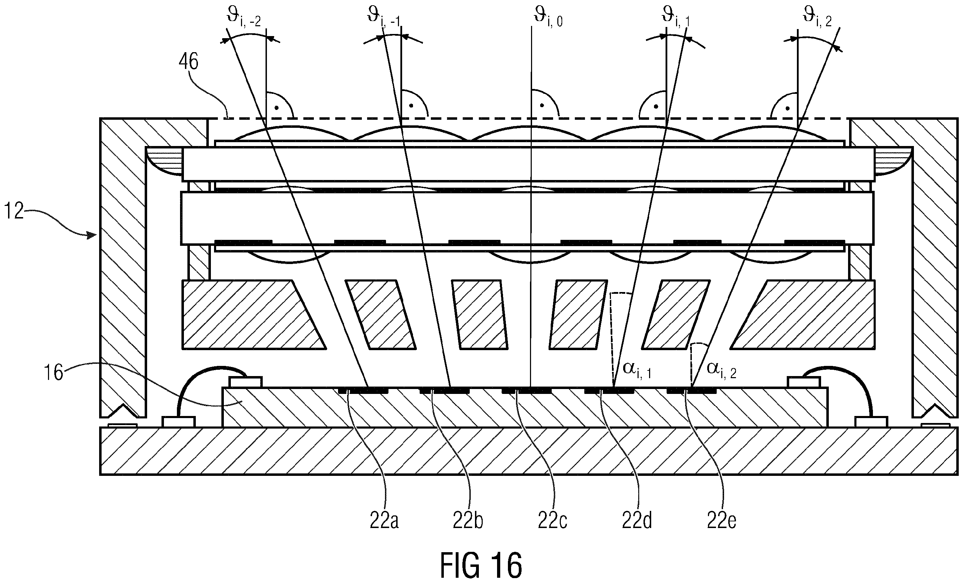

In anderen Worten besteht eine zweidimensionale Anordnung eines Multiapertur-Objektivs aus einem Array von optischen Kanälen mit $(2 \cdot i_{max} + 1)$ Kanälen in x- und $(2 \cdot j_{max} + 1)$ Kanälen in y-Dimension. Wie in Fig. 15 und nachfolgender Fig. 16 zu sehen, besitzt jeder optische Kanal des Multiapertur-Objektivs einen anderen Blickwinkel im Objektraum (wie es auch aus der WO 2011/045324 A2 bekannt ist) bzw. die verschiedenen optischen Kanäle bilden unterschiedliche Bereiche der Objektebene ab. D. h. die Schnittpunkte der Achsen der mittlere Blickrichtungen jedes optischen Kanals (= jeweilige optische Achse) mit der Objekteben ergeben eine vorgegebene (aus der Konstruktion bekannte) Verteilung (nachfolgende Fig. 16) . Zum Beispiel wird im Falle einer gewünschten verzeichnungsfreien Abbildung ein Gitter mit äquidistanten Abständen verwendet.

An mehreren (z. B. drei oder fünf) ausgewählten Positionen dieser Schnittpunkte mit der Objektebene (z. B. in den Punkten $P_{0,0}$, $P_{-imax,jmax}$ $P_{imax,-jmax}$, $P_{imax,-jmax}$ ,$P_{imax,jmax}$) werden in der Testmusterebene spezielle Objektstrukturen (z. B. Kreuze, Kreise, Quadrate u. Ä.) platziert. Die Auswahl der Mittelpunkte der Objektstrukturen beinhaltet dabei den Mittelpunkt der Objektebene (z. B. $P_{0,0}$), mindestens ein Paar vorteilhafterweise spiegelsymmetrisch positionierter Punkte oder Bereiche in Bezug auf die Roll-Achse (z. B. $P_{-imax,jmax}$ mit $P_{-imax,-jmax}$ oder $P_{imax,-jmax}$ mit $P_{imax,jmax}$) und/oder mindestens ein Paar vorteilhafterweise spiegelsymmetrisch positionierter Punkte oder Bereiche in Bezug auf die Nick-Achse (z. B. $P_{-imax,jmax}$ mit $P_{imax,jmax}$ oder $P_{-imax,-jmax}$ mit $P_{imax,-jmax}$)

Die Genauigkeit der im Folgenden beschriebenen Einzelschritte der aktiven Ausrichtung kann direkt proportional zum jeweiligen Abstand der beiden ausgewählten Punkte in der Objektebene erhöht werden.

Dabei wird durch einen möglichst großen Abstand der zugeordneten Punkte die größtmögliche Genauigkeit bei der Ausrichtung erzielt. Eine Winkelabweichung zwischen den Positionen $P_{i,j}$ kann mit einem Winkel $\vartheta_{i,j}$ angegeben werden, beispielsweise mit dem Winkel $\vartheta_{0,1}$ für eine Abweichung zwischen den Positionen $P_{0,0}$ und $P_{0,1}$. Alternativ weist beispielsweise ein Winkel $\vartheta_{0,-2}$ eine Abweichung bzw. eine Blickwinkeldifferenz der jeweiligen optischen Kanäle zwischen den Positionen $P_{0,0}$ und $P_{0,-2}$ auf.

Fig. 16 zeigt eine schematische Seitenschnittansicht umfassend die Multiaperturoptik 12 und den Bildsensor 16 zur Verdeutlichung der Zusammenhänge aus Fig. 15. Die Winkel $\vartheta_{i,y}$ mit y = -2, ..., 2 weisen gegenüber einer Ebene 46, die parallel zu dem erfassten Objektraum angeordnet ist, einen Winkel bezüglich einer Normalen, die auf der Ebene 46 senkrecht steht, auf.

Winkel $\alpha_{i,j}$ beschreiben Winkel zwischen einer jeweiligen Oberflächennormalen des Bildsensors 16 an den Bildbereichen 22a-e.

In anderen Worten zeigt Fig. 16 eine vereinfachte Schnittansicht eines Multiapertur-Abbildungssystems. In dieser Ausführungsform ist das Multilapertur-Objektiv (Stapelaufbau mit Mikrolinsen vorder- und rückseitig) bildseitig verbunden mit einer Platte zur Verhinderung von optischem Übersprechen (schwarzer Chip) in einem Gehäuse (grau, seitlich) integriert, welches im Prozess der aktiven Ausrichtung auf der Leiterplatte (grün, unten), auf der sich der kontaktierte digitale Bildsensor (braun) befindet, fixiert wird. Die mittlere Blickrichtung des jeweiligen optischen Kanals (i,j) im Objektraum wird durch den Winkel $\vartheta_{i,j}$ bezeichnet. Die mittlere Blickrichtung des jeweiligen optischen Kanals $\vartheta_{i,j}$ wird durch die Optikkonstruktion festgelegt und bedingt durch die optischen Eigenschaften des jeweilig zugehörigen Linsensystems (Brennweite, Brechungsindex der Materialien etc.) den Einfallswinkel in der Mitte des jeweiligen Mikrobildes $\alpha_{i,j}$.

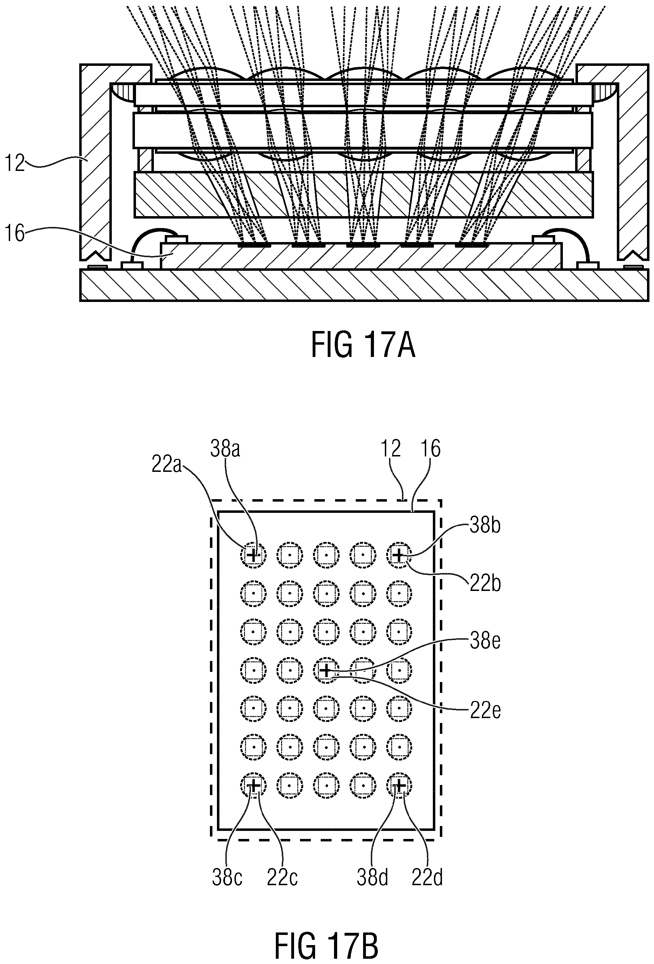

Die vorangehende Beschreibung des Prozessablauf der aktiven Ausrichtung ist ohne Beschränkung der Allgemeinheit anhand von Fig. 15 für ein Beispiel eines Multiapertur-Objektivs mit 7x5 optischen Kanälen und Kreuz als Objektstrukturen in den Schnittpunkten der mittleren Blickrichtung der optischen Kanäle in den vier Ecken des Arrays ($P_{-3,d}$, $P_{-3,-2}$, $P_{3,-2}$, $P_{3,2}$) sowie des zentralen optischen Kanals ($P_{0,0}$) dargestellt. Die Figuren 17a und 17b zeigen die Soll-Position nach erfolgreich durchgeführter aktiver Ausrichtung des Multiapertur-Objektivs gegenüber dem Bildsensor.

Fig. 17a zeigt eine schematische Seitenschnittansicht einer Multiaperturoptik 12, die gegenüber dem Bildsensor 16 ausgerichtet, d. h. justiert ist. Die Fig. 17b zeigt eine schematische Aufsicht dieser Situation der Fig. 17a. Die Marker 38a-e sind bezüglich der jeweiligen Bildbereiche 22a-e bezüglich der sechs Freiheitsgrade ausgerichtet. Eine Abweichung der Orte, an die die Marker 38a-d auf den Bildbereichen 22a-e projiziert werden, ist bezüglich der jeweiligen lokalen Koordinatenmittelpunkte minimal. In anderen Worten zeigen die Fig. 17a und 17b eine Soll-Position nach erfolgreicher aktiver Ausrichtung. Das Raster der Mikrobilder (gestrichelte Kreise) liegt deckungsgleich auf dem Raster der Pixelfelder des Bildsensors. (Quadrate) d. h. in jedem optischen Kanal befindet sich der Mittelpunkt des zugeordneten Bildkreises direkt im geometrischen Mittepunkt des entsprechenden Mikrobildfeldes. Die Bilder der ausgewählten Objektstrukturen befinden sich symmetrisch in den geometrischen Mittelpunkten der entsprechenden Mikrobildfelder. Links: Seitenansicht; rechts: Aufsicht.

Die vorangehend beschriebenen Ausführungsbeispiele ermöglichen eine erhöhte Genauigkeit gegenüber der Anwendung etablierter Verfahren und Maschinen zur Ausrichtung von Abbildungsoptiken, insbesondere von Multiaperturoptiken für kleinbauende Geräte. Ausführungsbeispiel ermöglichen die Automatisierbarkeit des jeweiligen Prozesses der Feinausrichtung zur Erreichung von schnellen Zykluszeiten im Produktionsprozess. Ferner kann eine erhöhte Ausbeute für die aufgebauten Kameramodule und somit eine geringere Prüf- und Ausschusskosten erhalten werden, da eine rasche Ausrichtung mit einer hohen Qualität erzielt werden kann.

Das bedeutet, dass Ausführungsbeispiele zur aktiven Ausrichtung speziell auf die Architektur von Multiapertur-Objektiven mit segmentiertem Gesichtsfeld ausgelegt werden können und die vorangehenden Vorteile dadurch ermöglichen. Aufgrund ihrer ultra-flachen Bauweise und der potenziell kostengünstigen Herstellungs- und Montagetechnologie sind Multiapertur-Abbildungssysteme zum Einsatz in Produkten der Unterhaltungselektronik (etwa Laptops, Spielkonsolen oder Spielzeug), und vor allem für den Einsatz in portablen Geräten, wie etwa Mobiltelefonen, Tablets, PDA, und Ähnlichem prädestiniert (PDA = persönlicher digitaler Assistent, Personal Digital Assistent). Weitere Anwendungsgebiete sind beispielsweise die Sensorik, etwa bei kameraartigen Sensoren, bildgebenden Sensoren in der Produktionstechnik. Ferner ist eine Verwendung in der Automobiltechnik, etwa bei optischen Sicherheitssensoren im Automobilinnenraum, bei Fahrassistenzsystemen, wie Rückfahrkameras oder zur Fahrspurerkennung denkbar. Ausführungsbeispiele können ebenso eingesetzt werden im Bereich der Sicherheit und Überwachung, etwa für unscheinbare Umfeldkameras mit großem Gesichtsfeld an und/oder in Gebäuden, Museen oder Objekten. Ferner können Ausführungsbeispiele im Bereich der Robotik, etwa als optischer Sensor zur Navigation, zur optischen Steuerung von Greifern und/oder Bauteilaufnahmevorrichtungen eingesetzt werden. Ein weiteres Anwendungsfeld vorangehend beschriebener Ausführungsbeispiele kann im Bereich der Medizintechnik gefunden werden, etwa bei einem Einsatz in bildgebenden Diagnoseverfahren, wie der Endoskopie. Eine Anwendung der vorangehend beschriebenen Ausführungsbeispiele ist jedoch nicht auf diese Anwendungsgebiete beschränkt.

Obwohl vorangehend beschriebene Ausführungsbeispiele Multiaperturoptiken und/oder Bildsensoren beschreiben die eine geringe Anzahl von optischen Kanälen aufweisen, etwa 5x7, können die Ausführungsbeispiele auch andere Multiaperturoptiken und/oder Bildsensoren angewendet werden, die beispielsweise mehr als 5, mehr als 50, oder mehr als 500 optische Kanäle aufweisen.

Obwohl die vorangehend beschriebene Ausführungsbeispiele so beschrieben wurden, dass eine Berechnungsvorrichtung einen Vergleich der Positionen, an denen die Muster in die Bildbereiche abgebildet werden, bzgl. eines lokalen oder globalen Mittelpunktes eines Bildbereichs ausführt, kann ein Referenzpunkt bzgl. dessen die Verschiebung oder Verdrehung bestimmt wird auch bezüglich eines beliebigen anderen Punktes erfolgen.

Obwohl im Zusammenhang mit vorangehend beschriebenen Ausführungsbeispielen eine zweidimensionale Anordnung der Bildbereiche 22a-e beschrieben wurde, ist es ebenfalls vorstellbar, dass die Bildbereiche 22a-e entlang einer eindimensionalen Zeilenstruktur angeordnet sind. Das bedeutet, dass einer der beiden Indizes i oder j eindimensional ausgestaltet ist und eine Positionsbestimmung basierend auf drei Referenzbereichen bzw. Bildbereichen erfolgen kann.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literatur

[1] www.aeiboston.com/platform_cmat.htm, Mai 2014

**Patentansprüche**

1. Vorrichtung (10) zur relativen Positionierung einer Multiaperturoptik (12) mit mehreren optischen Kanälen (14a-f) relativ zu einem Bildsensor (16) mit folgenden Merkmalen:

   einem Referenzobjekt (18), das angeordnet ist, so dass das Referenzobjekt (18) durch die Multiaperturoptik (12) in den optischen Kanälen (14a-f) auf einem Bildbereich (22a-e) pro Kanal (14a-f) abgebildet wird;
   einer Positioniervorrichtung (24), die steuerbar ist, um eine relative Lage zwischen der Multiaperturoptik (12) und dem Bildsensor (16) zu ändern;
   einer Berechnungsvorrichtung (26), die ausgebildet ist, um in Bildern des Referenzobjekts in zumindest drei Bildbereichen (22a-e) Ist-Positionen des Referenzobjekts (18) zu bestimmen und basierend auf einem Vergleich der Ist-Positionen mit Positionen, die Referenzpositionen in einem jeweiligen und/oder in anderen Bildbereichen sind, die Positioniervorrichtung (24) zu steuern.

2. Vorrichtung gemäß Anspruch 1, bei der die Berechnungsvorrichtung (26) ausgebildet ist, um die Positioniervorrichtung (24) basierend auf einem Vergleich der Ist-Position eines Bildbereichs (22a-e) relativ zu Ist-Positionen in anderen Bildbereichen (22a-e) zu steuern.

3. Vorrichtung gemäß Anspruch 1 oder 2, bei der die Berechnungsvorrichtung (26) ausgebildet ist, um die Positioniervorrichtung (24) basierend auf einem Vergleich der Ist-Position eines Bildbereichs (22a-e) mit einer Soll-Position bezüglich des Bildbereichs (22a-e) zu vergleichen.

4. Vorrichtung gemäß einem der vorangehenden Ansprüche, bei der die Berechnungsvorrichtung (26) ausgebildet ist, um eine Fixierungsvorrichtung (28) zu steuern, wobei die Fixierungsvorrichtung ausgebildet ist, um einen Klebstoff (32), der zwischen der Multiaperturoptik (12) und dem Bildsensor (16) oder zwischen der Multiaperturoptik (12) und einer Leiterplatte (36), an der der Bildsensor (12) angeordnet ist, angeordnet ist, auszuhärten.

5. Vorrichtung gemäß einem der vorangehenden Ansprüche, bei der das Referenzobjekt (18) zumindest drei Referenzbereiche (33a-c) aufweist, die eine Referenzmarkierung (35a-c) aufweisen, so dass jeweils eine Referenzmarkierung (35a-c) auf einen der zumindest drei Bildbereiche (22a-c) abgebildet wird, wobei die Berechnungsvorrichtung (26) ausgebildet ist, um die Ist-Position basierend auf einer Position der Referenzmarkierungen (38a-e) in dem Bildbereich zu bestimmen.

6. Vorrichtung gemäß einem der vorangehenden Ansprüche, bei der zumindest vier äußere Bildbereiche (22a-d) und ein innerer Bildbereich (22e) entlang einer Roll-Achse und einer Nick-Achse angeordnet sind, wobei die äußeren Bildbereiche (22a-c) in zwei Paaren parallel zu der Roll-Achse gegenüberliegend angeordnet sind und in zwei Paaren parallel zu der Nick-Achse gegenüberliegend angeordnet sind, wobei die Roll-Achse und die Nick-Achse senkrecht zu einander und senkrecht zu einer Gier-Achse, die parallel zu einer Oberflächennormalen des Bildsensors angeordnet ist, angeordnet sind und wobei der innere Bildbereich (22e) einen Schnittpunkt (O) der Roll-Achse, der Nick-Achse und der Gier-Achse aufweist und wobei die Berechnungsvorrichtung (26) ausgebildet ist, um basierend auf dem Vergleich der Ist-Positionen mit der Position eine Musterabweichung eines Musters (38) in dem inneren Bildbereich (22e) und in den zum viert äußeren Bildbereichen (22a-d) zu bestimmen.

7. Vorrichtung gemäß Anspruch 6, bei der die Berechnungsvorrichtung (26) ausgebildet ist, um ein Maß für eine Abstand (G) von Musterabständen der Ist-Position für den inneren Bildbereich (22e) basierend auf der Musterabweichung zu bestimmen, wobei die Berechnungsvorrichtung (26) ausgebildet ist, um die Positioniervorrichtung (24) so zu steuern, dass diese die Multiaperturoptik (12) entlang der Gier-Achse verschiebt, so dass der Abstand (G) einen Abstandssollwert ($G_{soll}$) erreicht.

8. Vorrichtung gemäß Anspruch 6 oder 7, bei der die Berechnungseinrichtung (26) ausgebildet ist, um ein Maß für eine erste Lateraldifferenz ($\Delta$R) der Ist-Position für den inneren Bildbereich (22e) basierend auf der Musterabweichung entlang der Roll-Achse zu bestimmen, um ein Maß für eine zweite Lateraldifferenz ($\Delta$R) für den inneren Bildbereich (22e) basierend auf der Musterabweichung entlang der Nick-Achse zu bestimmen und um die Positioniervorrichtung (24) so zu steuern, dass die erste Lateraldifferenz ($\Delta$R) einen ersten Lateraldifferenzsollwert (0) erreicht und dass die zweite Lateraldifferenz einen zweiten Lateraldifferenzsollwert (0) erreicht.

9. Vorrichtung gemäß einem der Ansprüche 6-8, bei der die Berechnungsvorrichtung (26) ausgebildet ist, um ein Maß für Keilfehlerdifferenzen ($\Delta$tN) von Musterabständen der Ist-Position für jeden der vier äußeren Bildbereiche (22a-d) zu bestimmen und um die Positioniervorrichtung (24) so zu steuern, dass die Multiaperturoptik bezüglich der Roll-Achse oder der Nick-Achse verkippt wird, so dass die Keilfehlerdifferenzen ($\Delta$tN) einen Roll-Sollwert (0) oder einen Nick-Sollwert (0) erreichen.

10. Vorrichtung gemäß einem der Ansprüche 6-9, bei der die Berechnungsvorrichtung (26) ausgebildet ist, um die Positioniervorrichtung (24) so zu steuern, dass der Roll-Sollwert (0) und der Nick-Sollwert (0) sequentiell nacheinander (910, 950) erreicht werden.

11. Vorrichtung gemäß einem der Ansprüche 6-10, bei der die Berechnungsvorrichtung (26) ausgebildet ist, um ein Maß für eine Rotationsdifferenz ($\delta$) der Musterabweichung für jeden der äußeren Bildbereiche (22a-d) entlang je einer ersten lokalen (x) und einer zweiten lokalen (y) lateralen Richtung zu bestimmen und um die Positioniervorrichtung (24) so zu steuern, dass diese die Multiaperturoptik (12) um die Gier-Achse dreht, so dass die Rotationsdifferenz einen Rotationssollwert (0) erreicht.

12. Vorrichtung gemäß einem der Ansprüche 6-11, bei der die Berechnungsvorrichtung (26) ausgebildet ist, um ein Maß für eine Abstandsdifferenz ($\Delta$G) der Musterabweichung für jeden der äußeren Bildbereiche (22a-d) entlang einer lokalen Richtung (x) parallel zu der Roll-Achse und entlang einer lokalen Richtung (y) parallel zu der Nick-Achse zu bestimmen und um die Positioniervorrichtung (24) so zu steuern, dass diese die Multiaperturoptik (12) entlang der Gier-Achse verschiebt, so dass die Abstandsdifferenzen ($\Delta$G) einen Sollwert (0) erreichen.

13. Vorrichtung gemäß einem der vorangehenden Ansprüche, bei der die Berechnungsvorrichtung ausgebildet ist um, um ein Maß für einen Abstand (G) von Musterabständen der Ist-Position für einen inneren Bildbereich (22e) basierend auf der Musterabweichung zu bestimmen, wobei die Berechnungsvorrichtung (26) ausgebildet ist, um die Positioniervorrichtung (24) so zu steuern, dass diese die Multiaperturoptik (12) entlang der Gier-Achse verschiebt, so dass der Abstand (G) einen Abstandssollwert ($\Delta$G$_{soll}$) erreicht;
um ein Maß für eine erste Lateraldifferenz ($\Delta$R) der Ist-Position für den inneren Bildbereich (22e) basierend auf der Musterabweichung entlang einer Roll-Achse zu bestimmen, um ein Maß für eine zweite Lateraldifferenz für den inneren Bildbereich basierend auf der Musterabweichung entlang einer Nick-Achse zu bestimmen und um die Positioniervorrichtung (24) so zu steuern, dass die erste Lateraldifferenz ($\Delta$R) einen ersten Lateraldifferenzsollwert (0) erreicht und dass die zweite Lateraldifferenz einen zweiten Lateraldifferenzsollwert (0) erreicht.
um ein Maß für Keilfehlerdifferenzen ($\Delta$tN) von Musterabständen der Ist-Position für vier äußere Bildbereiche (22a-d), die in zwei Paaren parallel zu der Roll-Achse gegenüberliegend angeordnet sind und in zwei Paaren parallel zu der Nick-Achse gegenüberliegend angeordnet sind, zu bestimmen und um die Positioniervorrichtung (24) so zu steuern, dass die Multiaperturoptik bezüglich der Roll-Achse oder der Nick-Achse verkippt wird, so dass die Keilfehlerdifferenzen einen Roll-Sollwert oder einen Nick-Sollwert (0) erreichen;
um ein Maß für eine Rotationsdifferenz ($\delta$) der Musterabweichung für die vier äußeren Bildbereiche (22a-d) entlang je einer ersten lokalen (x) und einer zweiten lokalen (y) lateralen Richtung zu bestimmen und um die Positioniervorrichtung (24) so zu steuern, dass diese die Multiaperturoptik (12) um eine Gier-Achse dreht, so dass die Rotationsdifferenzen ($\delta$) einen Rotationssollwert (0) erreichen; und
um ein Maß für eine Abstandsdifferenz ($\Delta$G) der Musterabweichung für jeden der äußeren Bildbereiche (22a-d), entlang einer lokalen Richtung (x) parallel zu der Roll-Achse und entlang einer lokalen Richtung (y) parallel zu der Nick-Achse zu bestimmen und um die Positioniervorrichtung (24) so zu steuern, dass diese die Multiaperturoptik (12) entlang der Gier-Achse verschiebt, so dass die Abstandsdifferenzen ($\Delta$G) einen Sollwert (0) erreichen.

14. Vorrichtung gemäß Anspruch 13, bei der die Berechnungsvorrichtung (26) ausgebildet ist, um die Positioniervorrichtung (24) jeweils so zu steuern, dass der Abstand (G) einen Abstandssollwert ($\Delta$G$_{soll}$) erreicht, dass die erste Lateraldifferenz einen ersten Lateraldifferenzsollwert (0) erreicht und dass die zweite Lateraldifferenz einen zweiten Lateraldifferenzsollwert (0) erreicht, bevor die Berechnungsvorrichtung (26) die Positioniervorrichtung (24) so steuert, dass die Keilfehlerdifferenzen ($\Delta$tN) den Roll-Sollwert (0) oder den Nick-Sollwert (0) erreichen, die Rotationsdifferenzen den Rotationssollwert (0) erreichen oder die Abstandsdifferenzen ($\Delta$G) den Sollwert (0) erreichen.

15. Vorrichtung gemäß einem der vorangehenden Ansprüche, bei der zumindest vier äußere Bildbereiche (22a-d) und ein innerer Bildbereich (22e) entlang einer Roll-Achse und einer Nick-Achse angeordnet sind, wobei die Berechnungsvorrichtung ausgebildet ist, um einen Abstand von Referenzmarkierungen (38a-d) von den Zentren der jeweiligen äußeren Bildbereiche (22a-d) zu bestimmen.

16. Vorrichtung gemäß eienm der vorangehenden Ansprüche, bei der die Berechnungsvorrichtung ausgebildet ist, um ein Bild, das in dem inneren Bildbereich von dem Referenzobjekt erfasst wird, zu fokussieren, und um die Positioniervorrichtung so zu steuern, dass Lateraldifferenzen bezüglich einer Roll-Achse und einer Nick-Achse einen jeweiligen Sollwert erreichen, so dass das Bild in dem inneren Bildbereich fokussiert und zentriert erhalten wird.

17. Verfahren zur relativen Positionierung einer Multiaperturoptik (12) mit mehreren optischen Kanälen (14a-f) relativ zu einem Bildsensor (16), mit folgenden Schritten:

Anordnen (12a) eines Referenzobjekts (18), so dass das Referenzobjekt (18) durch die Multiaperturoptik (12) in den optischen Kanälen (14a-f) auf einem Bildbereich (22a-e), pro Kanal (14a-f) abgebildet wird;
Bereitstellen einer Positioniervorrichtung (24), die steuerbar ist, um eine relative Lage zwischen der Multiaperturoptik (12) und dem Bildsensor (16) zu ändern;
Bestimmen von Ist-Positionen (814, 854; 914, 954; 1006, 1106) des Referenzobjekts (18) in Bildern des Referenzobjekts in zumindest drei Bildbereichen (22a-d);
Vergleichen der Ist-Positionen (824, 864; 926, 966; 1016; 1116) mit Positionen, die Referenzpositionen in einem jeweiligen und/oder in anderen Bildbereichen sind; und
Steuern einer Positioniervorrichtung (822, 862; 922, 962; 1014; 1114) basierend auf dem Vergleich.

**Claims**

1. Device (10) for relative positioning of multi-aperture optics (12) comprising several optical channels (14a-f) in relation to an image sensor (16), comprising:

a reference object (18) arranged such that the reference object (18) is imaged to an image region (22a-e) per channel (14a-f) by the multi-aperture optics (12) in the optical channels (14a-f);
a positioning device (24) controllable to change a relative location between the multi-aperture optics (12) and the image sensor (16);
a calculating device (26) configured to determine actual positions of the reference object (18) in at least three image regions (22a-e) in images of the reference object and to control the positioning device (24) on the basis of a comparison of the actual positions with positions that are reference positions in a respective one and/or in other image regions.

2. Device as claimed in claim 1, wherein the calculating device (26) is configured to control the positioning device (24) on the basis of a comparison of the actual position of an image region (22a-e) in relation to actual positions in other image regions (22a-e).

3. Device as claimed in claim 1 or 2, wherein the calculating device (26) is configured to control the positioning device (24) on the basis of a comparison of the actual position of an image region (22a-e) with a target position in relation to the image region (22a-e).

4. Device as claimed in any of the previous claims, wherein the calculating device (26) is configured to control a fixation device (28), the fixation device being configured to harden a glue (32) arranged between the multi-aperture optics (12) and the image sensor (16) or between the multi-aperture optics (12) and a printed circuit board (36) on which the image sensor (12) is arranged.

5. Device as claimed in any of the previous claims, wherein the reference object (18) comprises at least three reference regions (33a-c) comprising a reference marking (35a-c), so that one reference marking (35a-c) is imaged onto one of the at least three image regions (22a-c), respectively, the calculating device (26) being configured to determine the actual position on the basis of a position of the reference markings (38a-e) in the image region.

6. Device as claimed in any of the previous claims, wherein at least four outer image regions (22a-d) and one inner image region (22e) are arranged along a roll axis and a pitch axis, the outer image regions (22a-c) being arranged in two opposing pairs in parallel with the roll axis and in two opposing pairs in parallel with the pitch axis, the roll axis and the pitch axis being arranged to be perpendicular to each other and to be perpendicular to a yaw axis arranged in parallel with a surface normal of the image sensor, and the inner image region (22a) comprising an intersection point (O) of the roll axis, the pitch axis, and the yaw axis, and wherein the calculating device (26) is configured to determine, on the basis of the comparison of the actual positions with the position, a pattern deviation of a pattern (38) in the inner image region (22e) and in the at least four outer image regions (22a-d).

7. Device as claimed in claim 6, wherein the calculating device (26) is configured to determine a measure of a distance (G) of pattern distances of the actual position for the inner image region (22e) on the basis of the pattern deviation, the calculating device (26) being configured to control the positioning device (24) such that same shifts the multi-aperture optics (12) along the yaw axis, so that the distance (G) reaches a target distance value ($G_{target}$).

8. Device as claimed in claim 6 or 7, wherein the calculating device (26) is configured to determine a measure of a first lateral difference ($\Delta R$) of the actual position for the inner image region (22e) on the basis of the pattern deviation along the roll axis so as to determine a measure of a second lateral difference ($\Delta R$) for the inner image region (22e) on the basis of the pattern deviation along the pitch axis and to control the positioning device (24) such that the first lateral difference ($\Delta R$) reaches a first lateral difference target value (0) and that the second lateral difference reaches a second lateral difference target value (0).

9. Device as claimed in any of claims 6 to 8, wherein the calculating device (26) is configured to determine a measure of wedge error differences ($\Delta tN$) of pattern distances of the actual position for each of the four outer image regions (22a-d) and to control the positioning device (24) such that the multi-aperture optics are tilted in relation to the roll axis or the pitch axis, so that the wedge error differences ($\Delta tN$) reach a target roll value (0) or a target pitch value (0).

10. Device as claimed in any of claims 6 to 9, wherein the calculating device (26) is configured to control the positioning device (24) such that the target roll value (0) and the target pitch value (0) are reached sequentially one after the other (910, 950).

11. Device as claimed in any of claims 6 to 10, wherein the calculating device (26) is configured to determine a measure of a rotational difference ($\delta$) of the pattern deviation for each of the outer image regions (22a-d) along a first local (x) and a second local (y) lateral direction, respectively, and to control the positioning device (24) such that same rotates the multi-aperture optics (12) about the yaw axis, so that the rotational difference reaches a target rotational value (0).

12. Device as claimed in any of claims 6 to 11, wherein the calculating device (26) is configured to determine a measure of a difference in distances ($\Delta G$) of the pattern deviation for each of the outer image regions (22a-d) along a local direction (x) in parallel with the roll axis and along a local direction (y) in parallel with the pitch axis, and to control the positioning device (24) such that same shifts the multi-aperture optics (12) along the yaw axis, so that the differences in distance ($\Delta G$) reach a target value (0).

13. Device as claimed in any of the previous claims, wherein the calculating device is configured to
determine a measure of a distance (G) of pattern distances of the actual position for an inner image region (22e) on the basis of the pattern deviation, the calculating device (26) being configured to control the positioning device (24) such that same shifts the multi-aperture optics (12) along the yaw axis, so that the distance (G) reaches a target distance value ($G_{target}$).
to determine a measure of a first lateral difference ($\Delta R$) of the actual position for the inner image region (22e) on the basis of the pattern deviation along a roll axis so as to determine a measure of a second lateral difference for the inner image region on the basis of the pattern deviation along a pitch axis and to control the positioning device (24) such that the first lateral difference ($\Delta R$) reaches a first lateral difference target value (0) and that the second lateral difference reaches a second lateral difference target value (0),
determine a measure of wedge error differences ($\Delta tN$) of pattern distances of the actual position for four outer image regions (22a-d) arranged in two opposing pairs in parallel with the roll axis and in two opposing pairs in parallel with the pitch axis, and to control the positioning device (24) such that the multi-aperture optics are tilted in relation to the roll axis or the pitch axis, so that the wedge error differences reach a target roll value or a target pitch value (0);
determine a measure of a rotational difference ($\delta$) of the pattern deviation for the four outer image regions (22a-d) along a first local (x) and a second local (y) lateral direction, respectively, and to control the positioning device (24) such that same rotates the multi-aperture optics (12) about a yaw axis, so that the rotational differences ($\delta$) reach a target rotational value (0); and

determine a measure of a difference in distances ($\Delta G$) of the pattern deviation for each of the outer image regions (22a-d) along a local direction (x) in parallel with the roll axis and along a local direction (y) in parallel with the pitch axis, and to control the positioning device (24) such that same shifts the multi-aperture optics (12) along the yaw axis, so that the differences in distance ($\Delta G$) reach a target value (0).

14. Device as claimed in claim 13, wherein the calculating device (26) is configured to control the positioning device (24) in each case such that the distance (G) reaches a target distance value ($\Delta G_{target}$), that the first lateral difference reaches a first lateral difference target value (0), and that the second lateral difference reaches a second lateral difference target value (0), before the calculating device (26) controls the positioning device (24) such that the wedge error differences ($\Delta tN$) reach the target roll value (0) or the target pitch value (0), before the rotational differences reach the target rotational value (0), or before the differences in distance ($\Delta G$) reach the target value (0).

15. Device as claimed in any of the previous claims, wherein at least four outer image regions (22a-d) and one inner image region (22e) are arranged along a roll axis and a pitch axis, wherein the calculating device is configured to determine a distance of reference markings (38a-e) to the centers of the respective outer image regions (22a-d).

16. Device as claimed in any of the previous claims, wherein the calculating device is configured to focus an image that is captured in the inner image region by the reference object, and to control the positioning device such that lateral differences with respect to a roll axis and a pitch axis reach a respective target value so that the image is kept focused and centered in the inner image region

17. Method of relative positioning of multi-aperture optics (12) comprising several optical channels (14a-f) in relation to an image sensor (16), comprising:

arranging (12a) a reference object (18) such that the reference object (18) is imaged to an image region (22a-e) per channel (14a-f) by the multi-aperture optics (12) in the optical channels (14a-f);

providing a positioning device (24) controllable to change a relative location between the multi-aperture optics (12) and the image sensor (16);

determining actual positions (814, 854; 914, 954; 1006, 1106) of the reference object (18) in at least three image regions (22a-d) in images of the reference object;

comparing the actual positions (824, 864; 926, 966; 1016, 1116) with positions that are reference positions in a respective one and/or in other image regions; and

controlling a positioning device (822, 862; 922, 962; 1014; 1114) on the basis of said comparison.

**Revendications**

1. Dispositif (10) pour le positionnement relatif d'une optique multi-ouverture (12) avec une pluralité de canaux optiques (14a à f) par rapport à un capteur d'image (16), aux caractéristiques suivantes :

un objet de référence (18) qui est disposé de sorte que l'objet de référence (18) soit reproduit par l'optique multi-ouverture (12) dans les canaux optiques (14a à f) sur une zone d'image (22a à e) par canal (14a à f);

un dispositif de positionnement (24) qui peut être commandé pour modifier une position relative entre l'optique multi-ouverture (12) et le capteur d'image (16);

un dispositif de calcul (26) qui est conçu pour déterminer dans des images de l'objet de référence, dans au moins trois zones d'image (22a à e), les positions réelles de l'objet de référence (18) et pour commander, sur base d'une comparaison des positions réelles avec les positions qui sont des positions de référence dans une zone d'image respective et/ou dans d'autres zones d'image, le dispositif de positionnement (24).

2. Dispositif selon la revendication 1, dans lequel le dispositif de calcul (26) est conçu pour commander le dispositif de positionnement (24) sur base d'une comparaison de la position réelle d'une zone d'image (22a à e) par rapport aux positions réelles dans d'autres zones d'image (22a à e).

3. Dispositif selon la revendication 1 ou 2, dans lequel le dispositif de calcul (26) est conçu pour comparer le dispositif de positionnement (24) sur base d'une comparaison de la position réelle d'une zone d'image (22a à e) avec une position de consigne par rapport à la zone d'image (22a à e).

4. Dispositif selon l'une des revendications précédentes, dans lequel le dispositif de calcul (26) est conçu pour commander un dispositif de fixation (28), dans lequel le dispositif de fixation est conçu pour laisser durcir un adhésif (32) qui est disposé entre l'optique multi-ouverture (12) et le capteur d'image (16) ou entre l'optique multi-ouverture (12) et une carte de circuit imprimé (36) sur laquelle est disposé le capteur d'image (12).

5. Dispositif selon l'une des revendications précédentes, dans lequel l'objet de référence (18) présente au moins trois zones de référence (33a à c) qui présentent un repère de référence (35a à c), de sorte que soit chaque fois reproduit un repère de référence (35a à c) sur l'une des au moins trois zones d'image (22a à c), dans lequel le dispositif de calcul (26) est conçu pour déterminer la position réelle sur base d'une position des repères de référence (38a à e) dans la zone d'image.

6. Dispositif selon l'une des revendications précédentes, dans lequel au moins quatre zones d'image extérieures (22a à d) et une zone d'image intérieure (22e) sont disposées le long d'un axe de roulis et d'un axe de tangage, dans lequel les zones d'image extérieures (22a à c) sont disposées en deux paires opposées l'une à l'autre parallèles à l'axe de roulis et sont disposées en deux paires opposées l'une à l'autre parallèles à l'axe de tangage, dans lequel l'axe de roulis et l'axe de tangage sont disposés perpendiculaires l'un à l'autre et perpendiculaires à un axe de lacet qui est disposé parallèle à une normale de surface du capteur d'image et dans lequel la zone d'image intérieure (22e) présente une intersection (0) de l'axe de roulis, de l'axe de tangage et de l'axe de lacet, et dans lequel le dispositif de calcul (26) est conçu pour déterminer, sur base de la comparaison des positions réelles avec la position, un écart d'un modèle (38) dans la zone d'image intérieure (22e) et dans les zones d'image extérieures au nombre de quatre (22a à d).

7. Dispositif selon la revendication 6, dans lequel le dispositif de calcul (26) est conçu pour déterminer une mesure d'une distance (G) des distances de modèle de la position réelle pour la zone d'image intérieure (22e) sur base de l'écart de modèle, dans lequel le dispositif de calcul (26) est conçu pour commander le dispositif de positionnement (24) de sorte qu'il déplace l'optique multi-ouverture (12) le long de l'axe de lacet de sorte que la distance (G) atteigne une valeur de consigne de distance ($G_{soll}$).

8. Dispositif selon la revendication 6 ou 7, dans lequel le dispositif de calcul (26) est conçu pour déterminer une mesure d'une première différence latérale ($\Delta R$) de la position réelle pour la zone d'image intérieure (22e) sur base de l'écart de modèle le long de l'axe de roulis, pour déterminer une mesure pour une deuxième différence latérale ($\Delta R$) pour la zone d'image intérieure (22e) sur base de l'écart de modèle le long de l'axe de tangage et pour commander le dispositif de positionnement (24) de sorte que la première différence latérale ($\Delta R$) atteigne une première valeur de consigne de différence latérale (0) et que la deuxième différence latérale atteigne une deuxième valeur de consigne de différence latérale (0).

9. Dispositif selon l'une des revendications 6 à 8, dans lequel le dispositif de calcul (26) est conçu pour déterminer une mesure pour les différences d'erreur cunéiformes ($\Delta tN$) des distances de modèle de la position réelle pour chacune des quatre zones d'image extérieures (22a à d) et pour commander le dispositif de positionnement (24) de sorte que l'optique multi-ouverture soit inclinée par rapport à l'axe de roulis ou à l'axe de tangage, de sorte que les différences d'erreur cunéiformes ($\Delta tN$) atteignent une valeur de consigne de roulis (0) ou une valeur de consigne de tangage (0).

10. Dispositif selon l'une quelconque des revendications 6 à 9, dans lequel le dispositif de calcul (26) est conçu pour commander le dispositif de positionnement (24) de sorte que la valeur de consigne de roulis (0) et la valeur de consigne de tangage (0) soient atteintes en séquence l'une après l'autre (910, 950).

11. Dispositif selon l'une des revendications 6 à 10, dans lequel le dispositif de calcul (26) est conçu pour déterminer une mesure pour une différence de rotation ($\delta$) de l'écart de modèle pour chacune des zones d'image extérieures (22a à d) dans chaque fois une première (x) et une deuxième (y) direction latérale locale et pour commander le dispositif de positionnement (24) de sorte qu'il fasse tourner l'optique multi-ouverture (12) autour de l'axe de lacet, de sorte que la différence de rotation atteigne une valeur de consigne de rotation (0).

12. Dispositif selon l'une quelconque des revendications 6 à 11, dans lequel le dispositif de calcul (26) est conçu pour déterminer une mesure pour une différence de distance ($\Delta G$) de l'écart de modèle pour chacune des zones d'image extérieures (22a à d) dans une direction locale (x) parallèle à l'axe de roulis et dans une direction locale (y) parallèle à l'axe de tangage et pour commander le dispositif de positionnement (24) de sorte qu'il déplace l'optique multi-ouverture (12) le long de l'axe de lacet de sorte que les différences de distance ($\Delta G$) atteignent une valeur de consigne (0).

13. Dispositif selon l'une des revendications précédentes, dans lequel le dispositif de calcul est conçu pour déterminer une mesure pour une distance (G) des distances de modèle de la position réelle pour une zone d'image intérieure (22e) sur base de l'écart de modèle, dans lequel le dispositif de calcul (26) est conçu pour commander le dispositif de positionnement (24) de sorte qu'il déplace l'optique multi-ouverture (12) le long de l'axe de lacet de sorte que la distance (G) atteigne une valeur de consigne de distance ($\Delta G_{soll}$);

pour déterminer une mesure pour une première différence latérale ($\Delta R$) de la position réelle pour la zone d'image intérieure (22e) sur base de l'écart de modèle le long d'un axe de roulis, pour déterminer une mesure pour une deuxième différence latérale pour la zone d'image intérieure sur base de l'écart de modèle le long d'un axe de tangage et pour commander le dispositif de positionnement (24) de sorte que la première différence latérale ($\Delta R$) atteigne une première valeur de consigne de différence latérale (0) et que la deuxième différence latérale atteigne une deuxième valeur de consigne de différence latérale (0),

pour déterminer une mesure pour les différences d'erreur cunéiformes ($\Delta tN$) des distances de modèle de la position réelle pour quatre zones d'image extérieures (22a à d) qui sont disposées opposées en deux paires parallèles à l'axe de roulis et sont disposées opposées en deux paires parallèles à l'axe de tangage, et pour commander le dispositif de positionnement (24) de sorte que l'optique multi-ouverture soit inclinée par rapport à l'axe de roulis ou à l'axe de tangage, de sorte que les différences d'erreur cunéiformes atteignent une valeur de consigne de roulis ou une valeur de consigne de tangage (0);

pour déterminer une mesure pour une différence de rotation ($\delta$) de l'écart de modèle pour les quatre zones d'image extérieures (22a à d) dans chaque fois une première (x) et une deuxième (y) direction latérale locale et pour commander le dispositif de positionnement (24) de sorte qu'il fasse tourner l'optique multi-ouverture (12) autour d'un axe de lacet de sorte que les différences de rotation ($\delta$) atteignent une valeur de consigne de rotation (0); et pour déterminer une mesure pour une différence de distance ($\Delta G$) de l'écart de modèle pour chacune des zones d'image extérieures (22a à d) dans une direction locale (x) parallèle à l'axe de roulis et dans une direction locale (y) parallèle à l'axe de tangage et pour commander le dispositif de positionnement (24) de sorte qu'il déplace l'optique multi-ouverture (12) le long de l'axe de lacet de sorte que les différences de distance ($\Delta G$) atteignent une valeur de consigne (0).

14. Dispositif selon la revendication 13, dans lequel le dispositif de calcul (26) est conçu pour commander le dispositif de positionnement (24) de sorte que la distance (G) atteigne une valeur de consigne de distance ($\Delta G_{soll}$), que la première différence latérale atteigne une première valeur de consigne de différence latérale (0) et que la deuxième différence latérale atteigne une deuxième valeur de consigne de différence latérale (0) avant que le dispositif de calcul (26) ne commande le dispositif de positionnement (24) de sorte que les différences d'erreur cunéiformes ($\Delta tN$) n'atteignent la valeur de consigne de roulis (0) ou la valeur de consigne de tangage (0), que les différences de rotation n'atteignent la valeur de consigne de rotation (0) ou que les différences de distance ($\Delta G$) n'atteignent la valeur de consigne (0).

15. Dispositif selon l'une des revendications précédentes, dans lequel au moins quatre zones d'image extérieures (22a à d) et une zone d'image intérieure (22e) sont disposées le long d'un axe de roulis et d'un axe de tangage, dans lequel le dispositif de calcul est conçu pour déterminer une distance des repères de référence (38a à d) des centres des zones d'image extérieures respectives (22a à d).

16. Dispositif selon l'une des revendications précédentes, dans lequel le dispositif de calcul est conçu pour focaliser une image qui est capturée dans la zone d'image intérieure par l'objet de référence, et pour commander le dispositif de positionnement de sorte que les différences latérales par rapport à un axe de roulis et un axe de tangage atteignent une valeur de consigne respective, de sorte que l'image dans la zone d'image intérieure soit maintenue focalisée et centrée.

17. Procédé permettant le positionnement relatif d'une optique multi-ouverture (12) avec plusieurs canaux optiques (14a à f) par rapport à un capteur d'image (16), aux étapes suivantes consistant à:

disposer (12a) un objet de référence (18) de sorte que l'objet de référence (18) soit reproduit par canal (14a à f) par l'optique multi-ouverture (12) dans les canaux optiques (14a à f) sur une zone d'image (22a à e);

prévoir un dispositif de positionnement (24) qui peut être commandé pour modifier une position relative entre l'optique multi-ouverture (12) et le capteur d'image (16);

déterminer les positions réelles (814, 854; 914, 954; 1006, 1106) de l'objet de référence (18) dans les images de l'objet de référence dans au moins trois zones d'image (22a à d);

comparer les positions réelles (824, 864; 926, 966; 1016; 1116) avec les positions qui sont des positions de référence dans une zone d'image respective et/ou dans d'autres zones d'image; et

commander un dispositif de positionnement (822, 862; 922, 962; 1014; 1114) sur base de la comparaison.

EP 3 162 045 B1

FIG 1

FIG 2

EP 3 162 045 B1

FIG 3A

FIG 3B

Gier

Roll

Nick

FIG 4A

22a 38a 12 16

38b

22b

22e

38e

22d

38d

y,Nick

x,Roll

Gier,z

38c 22c

FIG 4B

FIG 5

**FIG 6A**

**FIG 6B**

FIG 7A

FIG 7B

810

```
┌─────────────────────┐
│     Fokussierung     │
│     des zentralen    │───812
│   optischen Kanals   │
└─────────────────────┘
            │
            ▼
┌─────────────────────┐        ┌──────────────┐
│   Bestimmung der     │        │  Startwert   │
814─│ Position der Teststruk-│──────▶│   $X_{0,0}$   │──816
│  tur aus $P_{0,0}$ im Bild │        └──────────────┘
└─────────────────────┘
            │
            ▼
┌─────────────────────┐
│      x-Achse         │◀─────────┐
818─│  Translationsschritt │          │
└─────────────────────┘          │
            │                     │
            ▼                     │
┌─────────────────────┐          │
│   Bestimmung der     │          │
822─│ Position der Teststruk-│       │
│  tur aus $P_{0,0}$ im Bild │       │
└─────────────────────┘          │
            │                     │      ┌──────────────────┐
            ▼                     │      │ Berechnung der    │
         ◇ 824          nein      └──────│  verbleibenden    │──826
    $X_{0,0}$ -O=0 ─────────────────────▶│   Schrittweite    │
         ◇                               └──────────────────┘
            │ ja
            ▼
┌─────────────────────┐
828─│  Weiter mit y-Achse  │
│   bzw. Nick-Achse    │
└─────────────────────┘
```

FIG 8A

| FIG 8 | |
|:---:|:---:|
| FIG 8A | FIG 8B |

800

850

852

Fokussierung des zentralen optischen Kanals

854

Bestimmung der Position der Teststruktur aus $P_{0,0}$ im Bild

856

Startwert $y_{0,0}$

858

y-Achse Translationsschritt

862

Bestimmung der Position der Teststruktur aus $P_{0,0}$ im Bild

864

$y_{0,0} - \mathbf{O} = 0$

nein

866

Berechnung der verbleibenden Schrittweite

ja

868

Weiter mit x-Achse bzw. Roll-Achse

## FIG 8B

| FIG 8 | |
|---|---|
| FIG 8A | FIG 8B |

910

Fokussierung
des zentralen
optischen Kanals     912

Zentrierung
(Translation in
x-y-Ebene)     914

918

916   Positionsbestimmung
der Teststrukturen aus
Eckpunkten im Bild

Startwerte

$r_{imax,jmax}$, $r_{imax,-jmax}$,
$r_{-imax,jmax}$, $r_{-imax,-jmax}$

922   Drehung
(Winkelschritt)
um Roll-Achse

924   Positionsbestimmung
der Teststrukturen aus
Eckpunkten im Bild

928

926   $r_{imax,jmax} - r_{imax,-jmax} = 0$
und
$r_{-imax,jmax} - r_{-imax,-jmax} = 0$

nein   Berechnung der
verbleibenden
Schrittweite

ja

932   Weiter mit Drehung
um Nick-Achse

| FIG 9 | |
|---|---|
| FIG 9A | FIG 9B |

FIG 9A

950

900

Fokussierung
des zentralen
optischen Kanals — 952

Zentrierung
(Translation in
x-y-Ebene) — 954

958

956 — Positionsbestimmung
der Teststrukturen aus
Eckpunkten im Bild

Startwerte
$r_{imax,jmax}$, $r_{imax,-jmax}$,
$r_{-imax,jmax}$, $r_{-imax,-jmax}$

962 — Drehung
(Winkelschritt)
um Nick-Achse

964 — Positionsbestimmung
der Teststrukturen aus
Eckpunkten im Bild

968

966

$r_{imax,jmax} - r_{-imax,jmax} = 0$
und
$r_{imax,-jmax} - r_{-imax,-jmax} = 0$

nein

Berechnung der
verbleibenden
Schrittweite

ja

Weiter mit Drehung
um Roll-Achse

| FIG 9 | |
|---|---|
| FIG 9A | FIG 9B |

FIG 9B

1000

Fokussierung
des zentralen
optischen Kanals —1002

Zentrierung
(Translation in
x-y-Ebene/
Roll-Nick-Ebene) —1004

1008

1006— Positionsbestimmung
der Teststrukturen aus
Eckpunkten im Bild

Startwerte
$(x,y)_{imax,jmax,}$ $(x,y)_{imax,-jmax,}$
$(x,y)_{-imax,jmax,}$ $(x,y)_{-imax,-jmax}$

1012— Drehung
(Winkelschritt)
um Gier-Achse

1014— Positionsbestimmung
der Teststrukturen aus
Eckpunkten im Bild

1016

$x_{-imax,jmax} - x_{imax,jmax} = 0$
$x_{-imax,-jmax} - x_{imax,-jmax} = 0$
$y_{-imax,jmax} - y_{-imax,-jmax} = 0$
$y_{imax,jmax} - y_{imax,-jmax} = 0$

nein

Berechnung der
verbleibenden
Schrittweite —1018

ja

1022— Weiter mit Translation in
z-Achse/Gier-Achse

FIG 10

1100

FIG 11

1200

```
┌─────────────────────┐
│   Grobausrichtung    │
│ Multiapertur-Objektiv│~1202
│    über Bildsensor   │
└─────────────────────┘
          │
          ▼
┌─────────────────────┐
│    Ausrichtung in    │
│      x-y-Ebene       │~1204
│   Roll-Nick-Ebene    │
└─────────────────────┘
          │
          ▼
┌─────────────────────┐
│     Fokussierung     │
│     des zentralen    │~1206
│   optischen Kanals   │
└─────────────────────┘
          │
          ▼
┌─────────────────────┐
│    Bestimmung der    │
│   Vergrößerung im    │~1208
│  zentralen optischen │
│        Kanal         │
└─────────────────────┘
          │
          ▼
```

1212~  ◇ Überein-stimmung mit Design ◇ —nein→ ┌──────────────────┐
                                               │  Anpassung des   │~1216
                                               │   Testmusters    │
                                               └──────────────────┘
          │ja                                          │
          ▼                                            │
1214~ ┌─────────────────────┐                          │
      │    Feinausrichtung   │ ◄───────────────────────┘
      └─────────────────────┘

# FIG 12

1300

```
┌─────────────────────┐
│   Grobausrichtung    │
│ Multiapertur-Objektiv├──1200
│   über Bildsensor    │
└─────────────────────┘
          │
          ▼
┌─────────────────────┐
│     Zentrierung      │
│   (Translation in    │
│     x-y-Ebene/       ├──800
│   Roll-Nick-Ebene)   │
└─────────────────────┘
          │
          ▼
┌─────────────────────┐
│     Keilfehler-      │
│    ausgleich Roll    ├──910
└─────────────────────┘
          │
          ▼
┌─────────────────────┐
│     Keilfehler-      │
│    ausgleich Nick    ├──950
└─────────────────────┘
          │
          ▼
┌─────────────────────┐
│    Ausgleich der     │
│     z-Verdrehung     ├──1000
└─────────────────────┘
          │
          ▼
┌─────────────────────┐
│    Korrektur des     │
│    Abstandsfehlers   ├──1100
└─────────────────────┘
          │
          ▼
┌─────────────────────┐
│    Fixierung des     │
│      Objektivs       ├──1302
└─────────────────────┘
```

900 (umfasst 910 und 950)

FIG 13

FIG 14

FIG 15

FIG 16

FIG 17A

FIG 17B

FIG 18

EP 3 162 045 B1

FIG 19

**IN DER BESCHREIBUNG AUFGEFÜHRTE DOKUMENTE**

**In der Beschreibung aufgeführte Patentdokumente**

- US 20130047396 A1
- JP 20070269879 B
- WO 2011045324 A2
- US 20130047396 A

- JP 2013120295 A
- US 2011001814 A1
- JP 2009092876 A
- US 20110298968 A1